(19) Europäisches Patentamt
European Patent Office
Office européen des brevets

(11) Publication number: **0 052 985**
**B1**

(12) **EUROPEAN PATENT SPECIFICATION**

(45) Date of publication of patent specification: **05.09.84**

(51) Int. Cl.$^3$: **C 09 B 62/085**, C 09 B 62/51, D 06 P 3/66

(21) Application number: **81305381.6**

(22) Date of filing: **12.11.81**

(54) **Reactive monoazo scarlet dyes.**

(30) Priority: **26.11.80 JP 167084/80**
**23.02.81 JP 25755/81**
**06.05.81 JP 68727/81**
**06.05.81 JP 68728/81**

(43) Date of publication of application:
**02.06.82 Bulletin 82/22**

(45) Publication of the grant of the patent:
**05.09.84 Bulletin 84/36**

(84) Designated Contracting States:
**BE CH DE FR GB IT LI NL**

(56) References cited:
**CH-A- 410 237**
**FR-A-2 437 426**
**GB-A-2 026 527**
**US-A-3 223 470**
**US-A-3 455 897**

**The file contains technical information submitted after the application was filed and not included in this specification**

(73) Proprietor: **SUMITOMO CHEMICAL COMPANY, LIMITED**
**15 Kitahama 5-chome Higashi-ku**
**Osaka-shi Osaka-fu (JP)**

(72) Inventor: **Kayane, Yutaka c/o Naonori Hirata**
**Ever Green Kanaoka 7-510 704-2, Kanaokacho**
**Sakai-shi Osaka-fu (JP)**
Inventor: **Sunami, Masaki**
**11-8-404, Sonehigashinocho-2-chome**
**Toyonaka-shi (JP)**
Inventor: **Otake, Katsumasa**
**184, Oaza Imazaike Taimacho**
**Kitakatsuragi-gun Nara-ken (JP)**
Inventor: **Tezuka, Yasuo**
**7-3, Funakicho**
**Ibaraki-shi (JP)**

(74) Representative: **Wharton, Peter Robert et al**
**Urquhart-Dykes & Lord 11th Floor Tower House**
**Merrion Way**
**Leeds, LS2 8PB West Yorkshire (GB)**

**EP 0 052 985 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to novel reactive monoazo dyes, their production and dyeing of cellulose fiber materials with them.

It is well known that dyes having a β-sulfatoethylsulfonyl group or so-called vinylsulfone type reactive dyes are used for dyeing cellulose fiber materials. But, products dyed with orange to scarlet azo reactive dyes of this kind are not deep in color because of the poor build-up property of the dyes, and also the dyed products are generally low in chlorine fastness, so that they often experience discloration due to chlorine in city water.

Dyes having a monochlorotriazinyl group are also known. Generally, however, these reactive dyes require high temperatures for dyeing and lack exhaustion dyeing ability. Accordingly, they are only used for printing. Besides, the products dyed with the dyes of this kind are low in acid stability. Thus, the dyes of this kind are not always satisfactory in practical use. For example, the following dyes are disclosed in U.S. Patent No. 3,223,470:

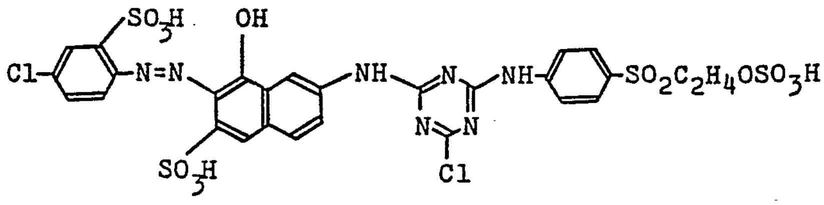

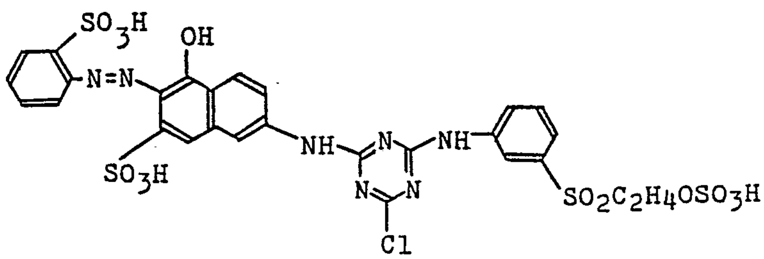

However, these dyes are not satisfactory in solubility, build-up property, washing-off property or the like.

Dyestuffs having two reactive groups are also known. For example CH—A—410,237 generally describes the combination of sulphatoethyl sulphonyl and monotriazinyl groups through an amine group which may be substituted. However, all the specific compounds disclosed employ an unsubstituted amine group and in any event the chromophores disclosed do not coincide with those to which the present invention relates. The properties of the dyestuff depend on the combination of reactive group (or groups) and chromophore, and the properties of such a combination cannot be predicted from the properties of the groups considered separately.

For the reasons described above, the inventors extensively studied to obtain orange to scarlet reactive dyes particularly superior in build up property and chlorine fastness to those previously known.

The present invention provides a compound represented by a free acid of the formula (I),

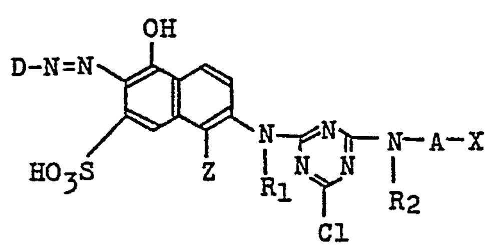

(I)

wherein D is a phenyl group substituted with 1 to 3 substituents selected from methyl, ethyl, methoxy, ethoxy, halogen, acetylamino, propionylamino, benzoylamino, succinylamino, maleinylamino, nitro, sulfonic acid and carboxyl groups, or a naphthyl group substituted with 1 to 3 sulfonic acid groups; $R_1$ is a hydrogen atom, or a methyl or ethyl group; $R_2$ is an alkyl group having 1 to 4 carbon atoms which is unsubstituted or substituted with a hydroxy, cyano, alkoxy, halogen, carboxy, alkoxycarbonyl or sulfonic acid group Z is a hydrogen atom or a sulfonic acid group; A is a phenylene residue unsubstituted or substituted with 1 or 2 substituents selected from methyl, ethyl, methoxy, ethoxy, chlorine, bromine and sulfonic acid groups, or a naphthalene residue unsubstituted or substituted with one sulfonic acid group; and X is $—SO_2CH=CH_2$ or $—SO_2CH_2CH_2Y$ in which Y is a group which is splittable by alkalis.

Among the compounds of the formula (I) having the substituted phenyl group as D in the formula (I), preferred are those having hydrogen atoms as $R_1$ and Z in the formula (I), more specifically, those having the following formula,

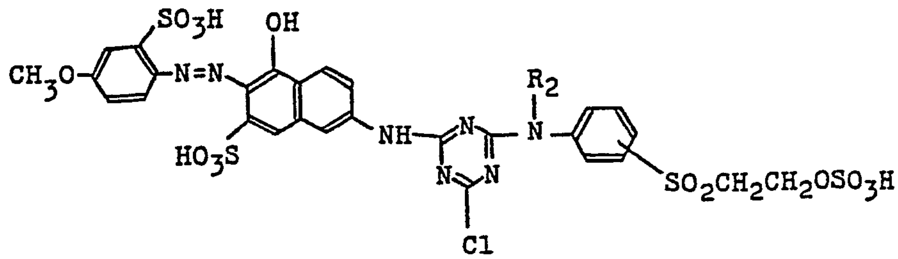

wherein $R_2$ is as defined above, preferably methyl, ethyl, n-propyl or 2-hydroxy ethyl groups.

Among the compounds (I) having the substituted naphthyl group as D in the formula (I), preferred are those having the following formula,

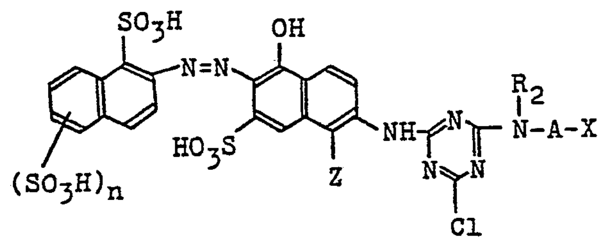

wherein $R_2$, A, X and Z are as defined above, and n is 0 or 1, more specifically, those having the following formula,

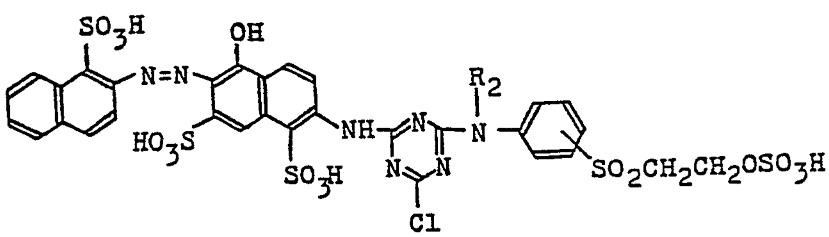

wherein $R_2$ is as defined above, preferably methyl, ethyl, n-propyl or 2-hydroxy ethyl groups.

Specific examples of the symbol Y when X in the formula (I) is $-SO_2CH_2CH_2Y$, include sulfate, phosphate and acetate groups and halogen atoms.

The present invention also provides a method for producing the compound represented by the formula (I), which comprises (1) subjecting cyanuric chloride to first-step condensation with a monoazo compound of the formula (IV),

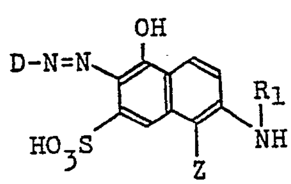

(IV)

wherein D, $R_1$ and Z are as defined above,
and then to second-step condensation with a compound of the formula (V),

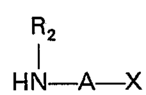

(V)

wherein $R_2$, A and X are as defined above, or

(2) subjecting cyanuric chloride to first-step condensation with the compound of the formula (V) and then to second-step condensation with the monoazo compound of the formula (IV), or

(3) condensing cyanuric chloride with a compound of the formula (III),

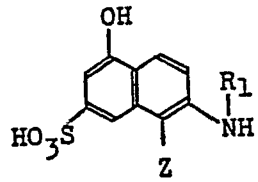

(III)

wherein $R_1$ and Z are as defined above, and the comound of the formula (V) in optional order to obtain a monochlorotriazinyl compound of the formula (VI),

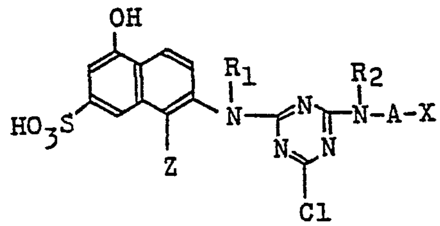

(VI)

wherein $R_1$, $R_2$, Z, A and X are as defined above, and then coupling the compound (VI) with a diazonium salt of an aromatic amine of the formula (II),

$$D—NH_2 \qquad (II)$$

wherein D is as defined above, or

(4) subjecting cyanuric chloride to first-step condensation with the compound of the formula (III), coupling the resulting compound with the diazonium salt of the aromatic amine of the formula (II) to obtain a monoazo compound of the formula (VII),

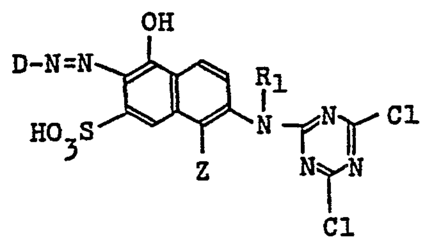

(VII)

wherein D, $R_1$ and Z are as defined above, and condensing the compound (VII) with the compound of the formula (V), or

(5) condensing cyanuric chloride with the monoazo compound of the formula (IV) and a compound of the formula (VIII);

$$\begin{array}{l} R_2 \\ | \\ HN—A—SO_2CH_2CH_2OH \end{array} \qquad (VIII)$$

wherein $R_2$ and A are as defined above, in optional order to obtain a monochlorotriazinyl compound of the formula (IX),

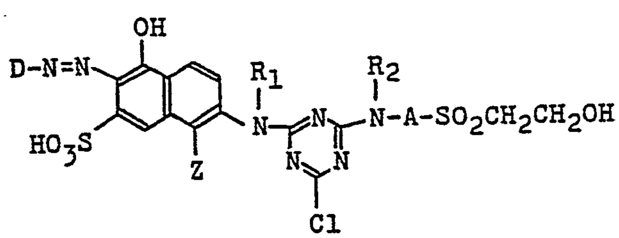

(IX)

wherein D, $R_1$, $R_2$, A and Z are as defined above, which is then esterified with an acid, or

(6) condensing cyanuric chloride with compounds of the formulae (III) and (VIII) in optional order, and coupling the resulting compound with the diazonium salt of the aromatic amine of the formula (II) to obtain the monoazo compound of the formula (IX) which is then esterified with an acid.

The method for the production of the monoazo compound of the formula (I) is illustrated in more detail as follows.

As the compound of the formula (II), the following compounds are exemplified:

2-Aminobenzenesulfonic acid
2-Amino-5-methylbenzenesulfonic acid
2-Amino-5-ethylbenzenesulfonic acid
2-Amino-5-methoxybenzenesulfonic acid
2-Amino-5-ethoxybenzenesulfonic acid
2-Amino-5-chlorobenzenesulfonic acid
2-Amino-5-bromobenzenesulfonic acid
2-Amino-5-acetylaminobenzenesulfonic acid
2-Amino-5-propionylaminobenzenesulfonic acid
2-Amino-5-benzoylaminobenzenesulfonic acid
2-Amino-5-succinylaminobenzenesulfonic acid
2-Amino-5-maleinylaminobenzenesulfonic acid
2-Amino-5-nitrobenzenesulfonic acid
2-Amino-4-chloro-5-methylbenzenesulfonic acid
2-Amino-5-chloro-4-methylbenzenesulfonic acid
2-Amino-4-methoxybenzenesulfonic acid
2-Amino-4-ethoxybenzenesulfonic acid
2-Amino-4-acetylaminobenzenesulfonic acid
2-Amino-4-propionylaminobenzenesulfonic acid
2-Amino-4-benzoylaminobenzenesulfonic acid
2-Amino-4-succinylaminobenzenesulfonic acid
2-Amino-4-maleinylaminobenzenesulfonic acid
3-Amino-4-methylbenzenesulfonic acid
3-Amino-4-ethylbenzenesulfonic acid
3-Amino-4-methoxybenzenesulfonic acid
3-Amino-4-ethoxybenzenesulfonic acid
3-Amino-4-chlorobenzenesulfonic acid
3-Amino-4-bromobenzenesulfonic acid
4-Amino-3-methylbenzenesulfonic acid
4-Amino-3-ethylbenzenesulfonic acid
4-Amino-3-methoxybenzenesulfonic acid
4-Amino-3-ethoxybenzenesulfonic acid
4-Amino-3-chlorobenzenesulfonic acid
4-Amino-3-nitrobenzenesulfonic acid
2-Aminobenzene-1,4-disulfonic acid
2-Aminobenzene-1,5-disulfonic acid
2-Aminobenzoic acid
2-Amino-4-methoxybenzoic acid
2-Amino-5-methoxybenzoic acid
2-Amino-4-acetylaminobenzoic acid
2-Amino-5-acetylaminobenzoic acid
2-Amino-4-sulfobenzoic acid
2-Amino-5-sulfobenzoic acid
4. Amino-2,5-dimethylbenzenesulfonic acid
4-Amino-2,5-diethylbenzenesulfonic acid
4-Amino-2,5-dimethoxybenzenesulfonic acid
4-Amino-2,5-diethoxybenzenesulfonic acid
4-Amino-2,5-dichlorobenzenesulfonic acid
4-Amino-2,5-dibromobenzenesulfonic acid
4-Amino-2-methyl-5-methoxybenzenesulfonic acid
4-Amino-2-methyl-5-ethoxybenzenesulfonic acid
2-Amino-5-methylbenzene-1,4-disulfonic acid
2-Amino-5-ethylbenzene-1,4-disulfonic acid
2-Amino-5-methoxybenzene-1,4-disulfonic acid
2-Amino-5-ethoxybenzene-1,4-disulfonic acid
2-Amino-5-acetylaminobenzene-1,4-disulfonic acid
2-Amino-5-propionylaminobenzene-1,4-disulfonic acid
2-Aminonaphthalene-1-sulfonic acid
2-Aminonaphthalene-5-sulfonic acid
2-Aminonaphthalene-6-sulfonic acid
2-Aminonaphthalene-7-sulfonic acid
2-Aminonaphthalene-8-sulfonic acid

2-Aminonaphthalene-1,4-disulfonic acid
2-Aminonaphthalene-1,5-disulfonic acid
2-Aminonaphthalene-1,7-disulfonic acid
2-Aminonaphthalene-1,5,7-trisulfonic acid
2-Aminonaphthalene-3,6-disulfonic acid
2-Aminonaphthalene-3,8-disulfonic acid
2-Aminonaphthalene-4,8-disulfonic acid
2-Aminonaphthalene-5,7-disulfonic acid
2-Aminonaphthalene-6,8-disulfonic acid
2-Aminonaphthalene-3,6,8-trisulfonic acid

A substitute, $R_2$, in the compound of the formula (V),

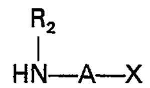

(V)

includes, for example, methyl, ethyl, n-propyl, n-butyl, iso-propyl, iso-butyl, sec-butyl, tert-butyl, hydroxymethyl, 2-hydroxyethyl, 2-hydroxypropyl, 3-hydroxypropyl, 2-hydroxybutyl, 4-hydroxybutyl, 1-methyl-2-hydroxypropyl, cyanomethyl, cyanoethyl, methoxymethyl, 2-methoxyethyl, 3-methoxypropyl, ethoxymethyl, 2-ethoxyethyl, chloromethyl, 2-chloroethyl, 3-chloropropyl, 4-chlorobutyl, carboxymethyl, 2-carboxyethyl, 2-methoxycarbonylethyl, 2-ethoxycarbonylmethyl, sulfomethyl and 2-sulfoethyl groups.

The residue represented by A in the formula (v) includes, for example.

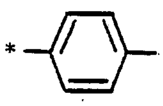 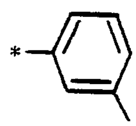 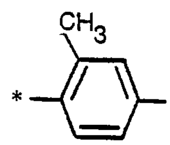 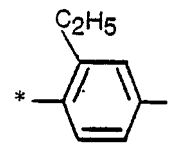

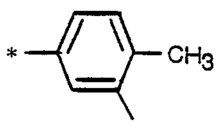 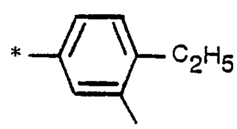 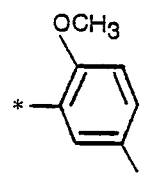 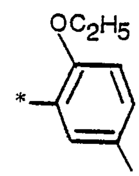

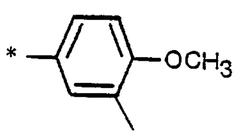 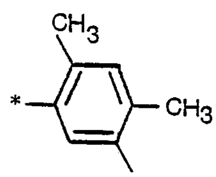 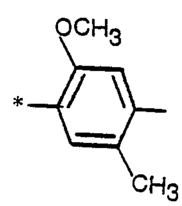 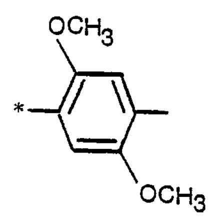

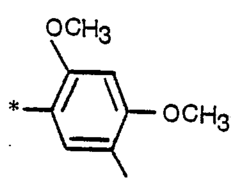 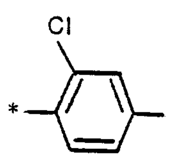 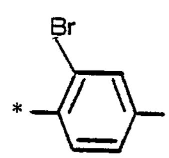 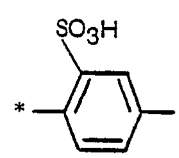

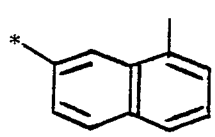 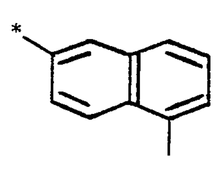 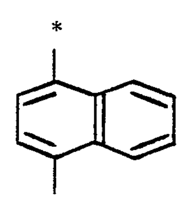 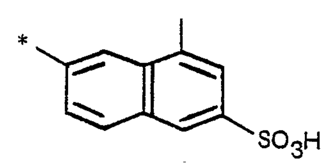

(The asterisked bond connects to —$NHR_2$).

In carrying out the method of the present invention, (1) the aromatic amine of the formula (II) is diazotized at −10° to 40°C in an aqueous medium and coupled with the compound of the formula (III) while adjusting the pH to 5 to 12, preferably 6 to 10 at a temperature of −10° to 50°C, preferaby 0° to 20°C, thereby to obtain the monoazo compound of the formula (IV). Alternatively, the compound (IV) may also be obtained by carrying out coupling in the same manner as above using the N-acylated product of the compound (III), and then hydrolyzing the resulting compound at 50° to 100°C in the presence of an acid or alkali to split the acyl group.

Subsequently, the compound (IV) is subjected to first-step condensation with cyanuric chloride in an aqueous medium while adjusting the pH to 2 to 10, preferably 3 to 7 at a temperature of −10° to 50°C, preferably 0° to 30°C, thereby to obtain a dichlorotriazinyl compound, and this compound is then subjected to second-step condensation with the compound of the formula (V) while adjusting the pH to 2 to 9, preferably 4 to 6 at a temperature of 0° to 70°C, preferably 30° to 50°C, thereby to obtain the compound of the formula (I).

(2) Alternatively, the compound (I) may also be obtained by subjecting the compound (V) to first-step condensation with cyanuric chloride in an aqueous medium while adjusting the pH to 1 to 8, preferably 2 to 6 at a temperature of −10° to 40°C, preferably 0° to 20°C, and then subjecting the resulting compound to second-step condensation with the compound (IV) while adjusting the pH to 2 to 9, preferably 4 to 6 at a temperature of 0° to 70°C, preferably 20° to 50°C.

(3) Cyanuric chloride is condensed with the compounds (III) and (V) in optional order in two steps in an aqueous medium while adjusting the pH to 1 to 8 at −10° to 40°C for the first-step condensation and the pH to 2 to 9 at 0° to 70°C for the second-step condensation, thereby to obtain a monochlorotriazinyl compound of the formula (VI), and this compound is then coupled with the diazonium salt of the aromatic amine (II) while adjusting the pH to 4 to 10, preferaby 5 to 9 at a temperature of −10° to 50°C, preferably 0° to 20°C, thereby to obtain the compound (I).

(4) The compound (I) may also be obtained by subjecting the compound (III) to first-step condensation with cyanuric chloride in an aqueous medium while adjusting the pH to 1 to 8, preferably 2 to 5 at a temperature of −10° to 450°C preferably 0° to 20°C, coupling the resulting compound with the diazonium salt of the aromatic amine (II) while adjusting the pH to 4 to 10, preferably 5 to 9 at a temperature of −10° to 50°C, preferably 0° to 20°C, thereby to obtain the monoazo compound of the formula (VII), and then subjecting the compound (VII) to second-step condensation with the compound (V) while adjusting the pH to 2 to 9, preferably, 4 to 6 at a temperature of 0° to 70°C, preferably 30° to 50°C.

(5) and (6). The dye (I) may also be obtained by carrying out the above procedures using a compound of the formula (VIII) in place of the compound (V), followed by final esterification with an acid of 2 to 10 mole ratio at a temperature of 0° to 30°C or further treatment with an alkali while adjusting the pH to 8 to 10 at 20° to 50°C.

The present compound of the formula (I) can be used for dyeing cellulose fiber materials in an orange to scarlet color of deep hue by a conventional dyeing method such as exhaustion dyeing, printing and continuous dyeing including a cold-pad-batch method.

Examples of cellulose fiber materials which can be dyed in accordance with the present invention, are natural or regenerated cellulosic fibers such as cotton, flax, viscose rayon, viscose stable and the like.

Exhaustion dyeing can be carried out at relatively low temperatures using a dyeing bath containing sodium sulfate or sodium chloride and an acid-binding agent such as sodium carbonate, sodium tertiary phosphate or sodium hydroxide. Printing can be carried out by using a print paste containing an acid-binding agent (e.g. sodium hydrogen carbonate, sodium carbonate, sodium tertiary phosphate, sodium hydroxide), urea and a thickening agent such as preferably sodium alginate, and the printing is followed by intermediate drying and steaming or dry heating at 100° to 200°C. Further, the dyeing of the present invention may be carried out by a continuous process such as a cold-pad-batch process.

The dyes of the formula (I) of the present invention have good build-up property and produce dyed products superior in chlorine fastness (3—4 grade, ISO standard) and perspiration-light fastness. Particularly, considering that fading of dyed products due to trace amounts of active chlorine in city water frequently becomes a problem on washing at home, the dyes of the present invention superior in chlorine fastness are of high value. Also, as to perspiration-light fastness which has recently become serious with an increase in the demand for sportswear, the grade of that fastness of the present dyes is as high as 3 to 4 grade, which means that the value of the dyes is also high in this respect.

Further, the products dyed with the conventional reactive dyes, are affected by acid gases in air to lower fastnesses with the lapse of time. But, in accordance with the present invention, such a drawback can be overcome. That is, the acid stability of dyed products obtained with the dyes of the present invention, as tested as described below, is as good as 4—5 to 5 grade: Dyed cloth is dipped in 1% acetic acid for 30 minutes and treated at 37 ± 2°C for 6 hours under pressure of 125 g/cm$^2$ on a perspirometer. The dyes of the present invention are also of high value in this respect.

Further, the present dyes have the following great advantages: The alkali stability is good enough to show high percent exhaustion and high percent fixation in exhaustion dyeing as well as high percent

fixation in printing, and therefore dyed products of deep hue can be obtained. Besides, the present dyes are superior in washing-off property.

In exhaustion dyeing, the dyes of the present invention are little affected by change in dyeing temperature, alkali agent, amount of inorganic salt and liquor ratio, so that they have a unique performance that dyeing can be carried out with very high reproducibility.

The present invention will be illustrated with reference to the following examples, which are not however to be interpreted as limiting the invention thereto. Parts and % are by weight.

Example 1

Cyanuric chloride (9.2 parts) is dispersed at 0° to 5°C in a solution of a nonionic surfactant (0.1 part) in water (100 parts), and a solution of J acid (11.3 parts) in water (100 parts) produced at a pH of 7 to 8 is added dropwise at 0° to 5°C over 1 hour. After completion of the addition, the mixture is adjusted to pH of 3 with 20% aqueous sodium carbonate solution, and then stirred for 2 hours. Thereafter, the sulfuric ester of 1-N-ethylaminobenzene-3-β-hydroxyethylsulfone (16 parts) is added, and the mixture is heated to 40°C while controlling the pH to 5 to 6 with 20% aqueous sodium carbonate solution, and stirring is continued at the same temperature for 5 hours.

The reaction solution is then cooled again to 0° to 5°C, and sodium hydrogen carbonate (12.6 parts) is added. A liquor prepared in advance by diazotizing 2-amino-5-methoxybenzenesulfonic acid (9.6 parts) in a usual manner is added to the above reaction solution at 0° to 5°C over 1 hour, and stirring is continued at the same temperature for 2 hours. The pH of the reaction solution is adjusted to 5 to 6 with hydrochloric acid, and then sodium chloride (40 parts) is added to deposit crystals which are then collected on a suction-filter, washed and dried at 60°C to obtain a dye of the formula (1),

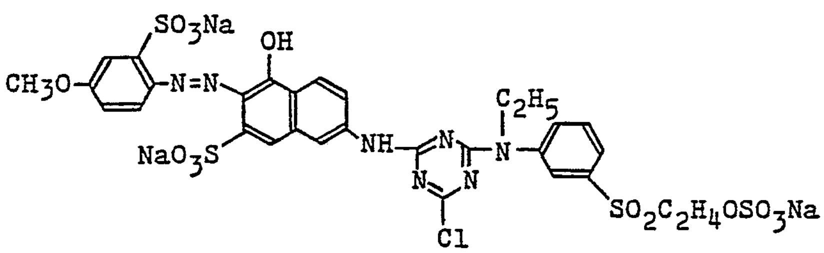

(1)

($\lambda_{max}$, 503 nm)

The dye (1) may also be synthesized by the following method: The same procedure as above is repeated, except that 1-N-ethylaminobenzene-3-β-hydroxyethylsulfone (11.4 parts) is used in place of the sulfuric ester of 1-N-ethylaminobenzene-3-β-hydroxyethylsulfone. The resulting compound is added to 100% sulfuric acid (500 parts) at 5° to 20°C over 2 hours, and the mixture is stirred at the same temperature for 3 hours. The reaction solution is then gradually discharged into ice (1200 parts), and deposited crystals are collected by filtration. The crystals are then dispersed in water (400 parts) and dissolved by adjusting the pH to 5 to 6 with sodium carbonate. Sodium chloride (60 parts) is added to re-deposit crystals which are then suction-filtered, washed and dried at 60°C.

The dye (1) (0.3 part) is dissolved in water (200 parts), and after adding sodium sulfate (20 parts) and then cotton (10 parts), the temperature is raised to 50°C. 30 Minutes thereafter, sodium carbonate (4 parts) is added, and dyeing is continued at the same temperature for 1 hour. After completion of the dyeing, the dyed cotton is washed with water and soaped to obtain a scarlet dyed product superior in chlorine fastness.

In the same manner as in Example 1, dyes producing dyed products of deep orange to scarlet color superior in chlorine fastness are obtained using the following compounds.

| Run No. | D–$NH_2$ (II) | Compounds of the Formula (III) | | 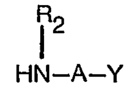 (V) |
|---|---|---|---|---|
| | | Z | $R_1$ | |
| (2) | 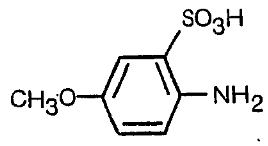 | H | H | 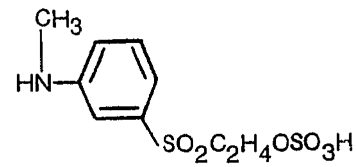 |
| (3) | 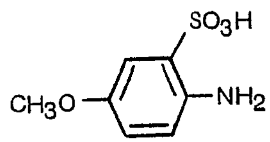 | H | H | 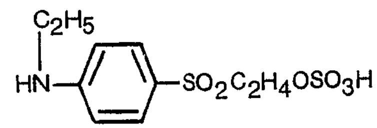 |
| (4) | 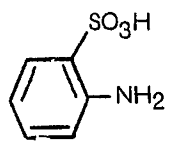 | H | H | 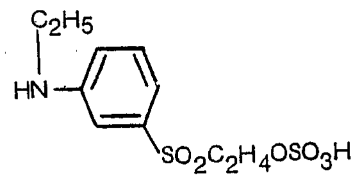 |
| (5) | 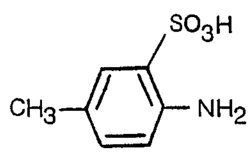 | $SO_3H$ | H | 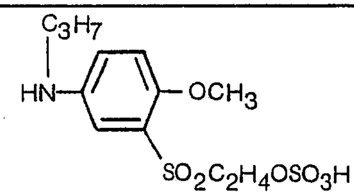 |
| (6) | 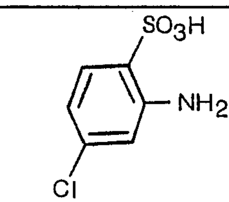 | H | $CH_3$ | 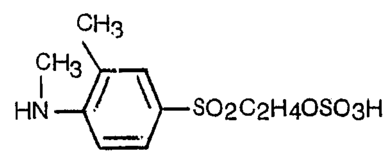 |

Example 2

Cyanuric chloride (9.2 parts) is dispersed at 0° to 5°C in a solution of a nonionic surfactant (0.1 part) in water (100 parts), and a solution containing 7-amino-4-hydroxy-3-(2-sulfo-4-ethoxyphenylazo)naphthalene-2-sulfonic acid, as synthesized from J acid (12 parts) and the diazonium salt of 2-amino-5-ethoxybenzenesulfonic acid (10.8 parts), is added dropwise over 1 hour while maintaining the pH at 4 to 5 with 20% aqueous sodium carbonate solution. The mixture is then stirred at 0° to 10°C for 2 hours. Thereafter, the sulfuric ester of 1-N-methylaminobenzene-3-β-hydroxyethylsulfone (15 parts) is added, and the temperature is raised to 50°C while adjusting the pH to 5 to 6 with 20% aqueous sodium carbonate solution, and the mixture is stirred at the same temperature for 6 hours. Sodium chloride (40 parts) is added to deposit crystals which are then collected on a suction-filter, washed and dried at 60°C to obtain a dye of the formula (7),

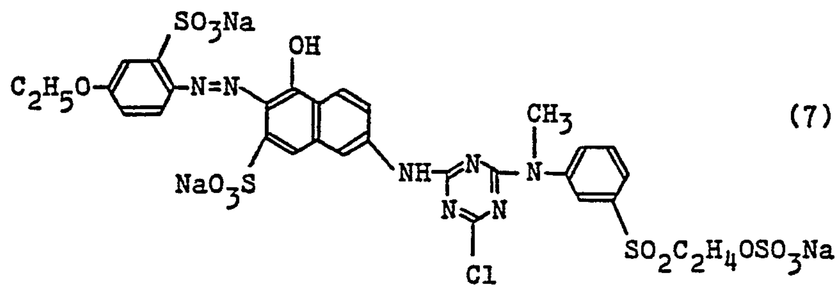

(7)

($\lambda_{max}$, 502 nm)

The dye (7) (0.3 part) is dissolved in water (150 parts), and after adding sodium sulfate (30 parts) and then cotton (10 parts), the temperature is raised to 60°C. 20 Minutes thereafter, sodium carbonate (4 parts) is added, and dyeing is carried out at the same temperature for 1 hour. After completion of the dyeing, the dyed cotton is washed with water and soaped to obtain a dyed product of deep scarlet color superior in chlorine fastness.

In the same manner as above, dyes producing dyed products of deep orange to scarlet color superior in chlorine fastness are obtained using the following compounds.

| Run No. | D–$NH_2$ (II) | Compounds of the Formula (III) | | $R_2$–HN–A–X (V) |
|---|---|---|---|---|
| | | Z | $R_1$ | |
| (8) | 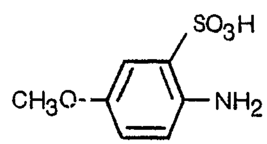 | H | H | 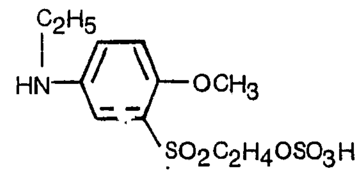 |
| (9) | 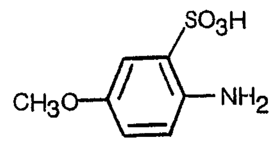 | H | H | 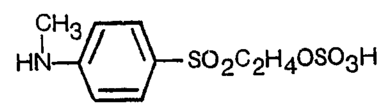 |
| (10) | 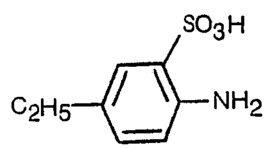 | $SO_3H$ | H | 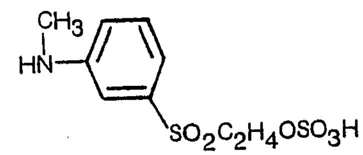 |
| (11) | 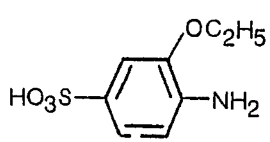 | H | H | 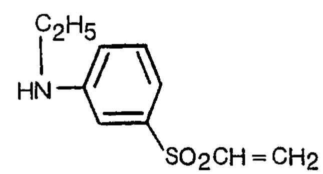 |

| Run No. | D–$NH_2$ (II) | Compounds of the Formula (III) | | $HN(R_2)$–A–X (V) |
|---|---|---|---|---|
| | | Z | $R_1$ | |
| (12) | 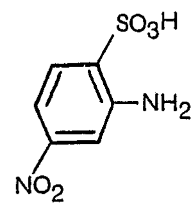 | H | H | 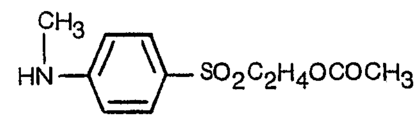 |
| (13) | 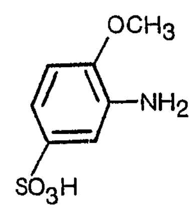 | H | H | 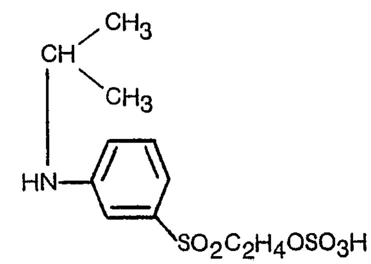 |
| (14) | 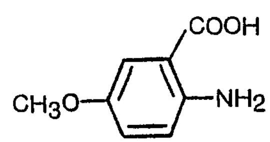 | $SO_3H$ | H | 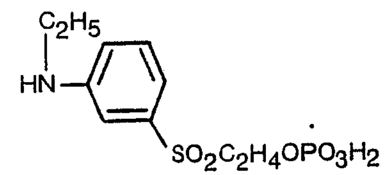 |
| (15) | 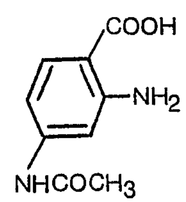 | H | $C_2H_5$ | 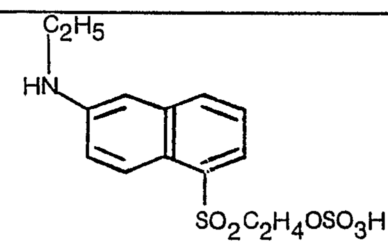 |

Example 3

Cyanuric chloride (9.2 parts) is dispersed at 0°C to 5°C in a solution of a nonionic surfactant (0.1 part) in water (100 parts), and a solution of J acid (11.3 parts) in water (200 parts) produced at a pH of 7 to 8 is added dropwise at 0° to 5°C over 1 hour. After completion of the addition, the mixture is adjusted to a pH of 3 with 20% aqueous sodium carbonate solution, followed by stirring for 2 hours. Sodium hydrogen carbonate (14 parts) is then added. Thereafter, a liquor prepared by diazotizing 2-amino-5-methoxybenzenesulfonic acid (9.6 parts) in a usual manner is added at 0° to 5°C over 1 hour, and the mixture is stirred at the same temperature for 4 hours. After adjusting the pH of the reaction mixture to 5 to 6 with hydrochloric acid, the sulfuric ester of 1-N-hydroxyethylaminobenzene-3-β-hydroxyethylsulfone (16 parts) is added. The temperature is then raised to 40°C while adjusting the pH to 5 to 6 with 20% aqueous sodium carbonate solution, and the mixture is stirred at the same temperature for 6 hours. Sodium chloride (40 parts) is added to deposit crystals which are then collected on a suction-filter, washed and dried at 60°C to obtain a dye of the formula (16),

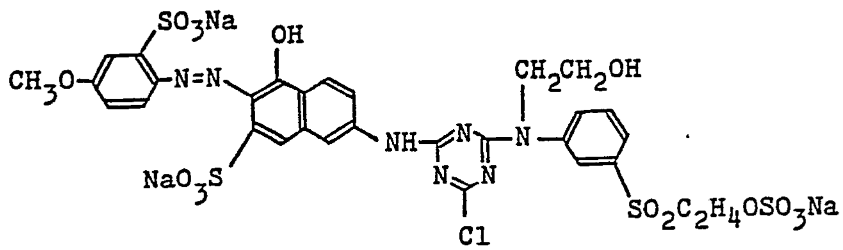

(16)

($\lambda_{max}$, 502 nm)

The dye (16) (0.3 part) is dissolved in water (300 parts), and after adding sodium sulfate (30 parts) and then cotton (10 parts), the temperature is raised to 60°C. 20 Minutes thereafter, sodium carbonate (5 parts) is added, and dyeing is carried out at the same temperature for 1 hour. After completion of the dyeing, the dyed cotton is washed with water and soaped to obtain a dyed product of deep scarlet color superior in chlorine fastness.

In the same manner as in Example 3, dyes producing dyed products of deep orange to scarlet color superior in chlorine fastness are obtained using the following compounds.

| Run No. | $D-NH_2$ (II) | Compounds of the Formula (III) | | $R_2$ <br> \| <br> $HN-A-X$ (V) |
|---|---|---|---|---|
| | | Z | $R_1$ | |
| (17) | 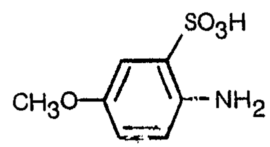 | H | H | 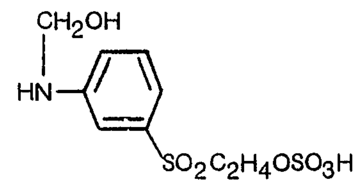 |
| (18) | 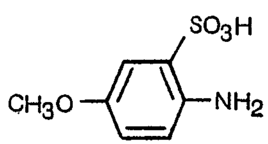 | H | H | 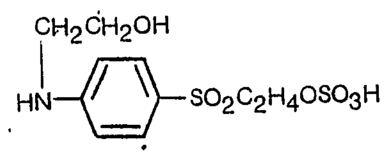 |
| (19) | 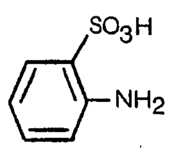 | H | H | 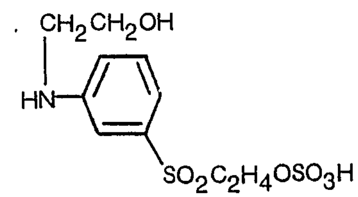 |
| (20) | 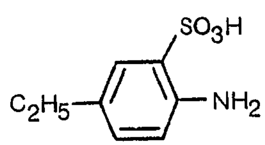 | $SO_3H$ | H | 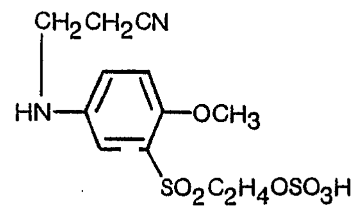 |

| Run No. | D–$NH_2$ (II) | Compounds of the Formula (III) | | $R_2$ <br> HN–A–X (V) |
|---|---|---|---|---|
| | | Z | $R_1$ | |
| (21) | 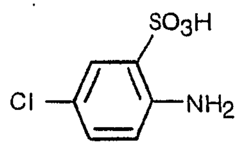 | H | $CH_3$ | 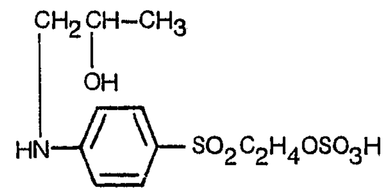 |
| (22) | 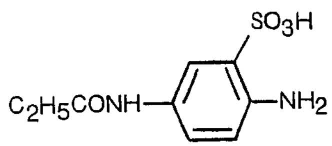 | H | H | 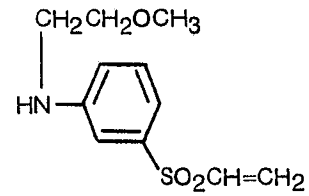 |
| (23) | 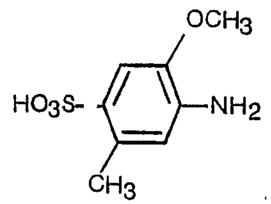 | H | H | 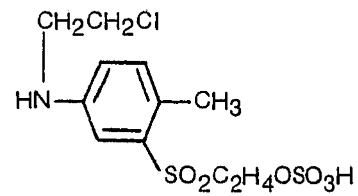 |
| (24) | 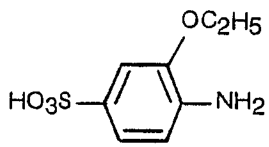 | H | H | 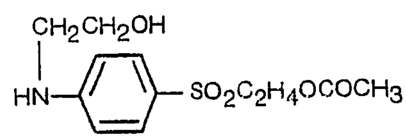 |

| Run No. | D–$NH_2$ (II) | Compounds of the Formula (III) | | $R_2$<br>\|<br>HN–A–X (V) |
|---|---|---|---|---|
| | | Z | $R_1$ | |
| (25) | 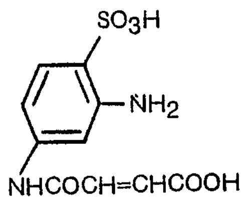 | H | H | 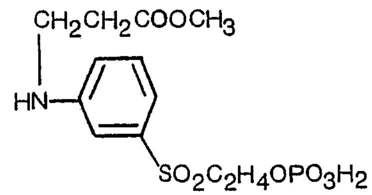 |
| (26) | 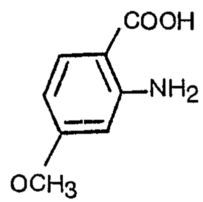 | $SO_3H$ | H | 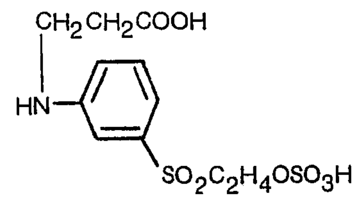 |
| (27) | 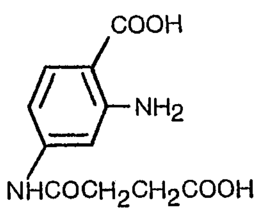 | H | $CH_3$ | 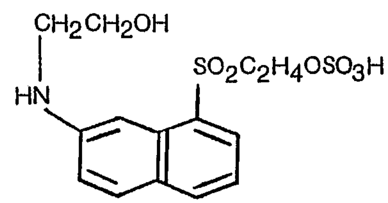 |

Example 4

Cyanuric chloride (9.2 parts) is dispersed at 0° to 5°C in a solution of a nonionic surfactant (0.1 part) in water (100 parts), and a solution obtained by dissolving the sulfuric ester of 1-N-hydroxymethylaminobenzene-3-β-hydroxyethylsulfone (14 parts) in water (100 parts) at a pH of 4 to 5, is added dropwise at 0°C to 5°C over 1 hour. After completion of the addition, the mixture is adjusted to a pH of 3 with 20% aqueous sodium carbonate solution, followed by stirring for 2 hours. Thereafter, J acid (11.3 parts) is added, and the temperature is raised to 40°C while adjusting the pH of the mixture to 5 to 6 with 20% aqueous sodium carbonate solution, and stirring is continued at the same temperature for 2 hours. The reaction solution is then cooled again to 0° to 5°C, and sodium hydrogen carbonate (12.6 parts) is added. A liquor prepared by diazotizing 2-amino-5-ethoxybenzenesulfonic acid (10 parts) in a usual manner is added at 0° to 5°C over 1 hour. After stirring at the same temperature for 2 hours, the mixture is adjusted to pH 5 to 6 with hydrochloric acid. Sodium chloride (60 parts) is then added to deposit crystals which are then collected on a suction-filter, washed with water and dried at 60°C to obtain a dye of the formula (28),

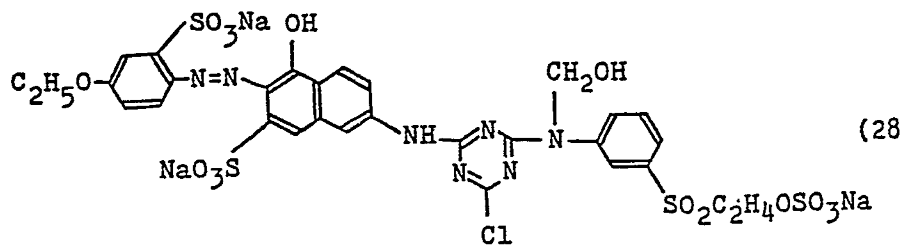

(28)

($\lambda_{max}$, 503 nm)

The dye (28) (0.3 part) is dissolved in water (200 parts), and after adding sodium sulfate (30 parts) and then cotton (10 parts), the temperature is raised to 50°C. 30 Minutes thereafter, sodium tertiary phosphate (4 parts) is added, and dyeing is carried out at the same temperature for 1 hour. After completion of the dyeing, the dyed cotton is washed with water and soaped to obtain a dyed product of deep scarlet color superior in chlorine fastness.

In the same manner as in Example 4, dyes producing dyed products of deep orange to scarlet color superior in chlorine fastness are obtained using the following compounds.

| Run No. | D–$NH_2$ (II) | Compounds of the Formula (III) | | 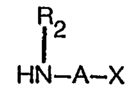 (V) |
|---|---|---|---|---|
| | | Z | $R_1$ | |
| (29) | 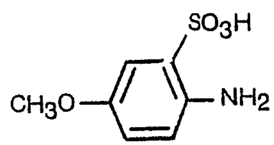 | H | H | 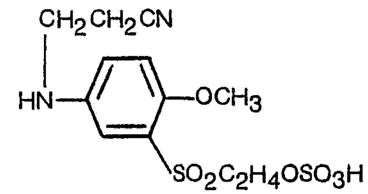 |
| (30) | 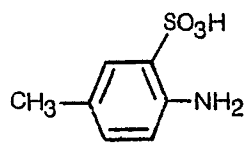 | H | $CH_3$ | 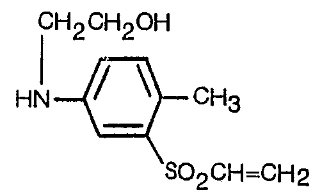 |
| (31) | 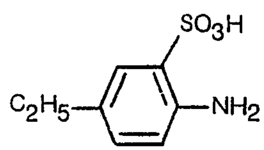 | H | H | 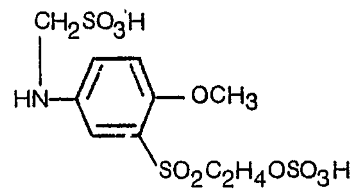 |
| (32) | 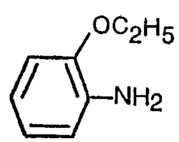 | $SO_3H$ | H | 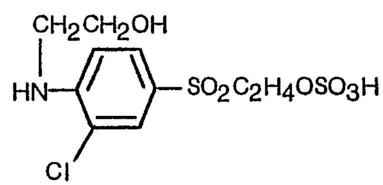 |

Example 5

Cyanuric chloride (9.2 parts) is dispersed at 0° to 5°C in a solution of a nonionic surfactant (0.1 part) in water (100 parts), and a solution of J acid (11.3 parts) in water (100 parts) produced at a pH of 7 to 8 is added dropwise at 0° to 5°C over 1 hour. After completion of the addition, the mixture is adjusted to a pH of 3 with 20% aqueous sodium carbonate solution, followed by stirring for 2 hours. Thereafter, the sulfuric ester of 1-N-ethylaminobenzene-3-β-hydroxyethylsulfone (16 parts) is added, and the mixture is heated to 40°C while adjusting the pH to 5 to 6 with 20% aqueous sodium carbonate solution, followed by stirring at the same temperature for 5 hours.

The reaction solution is then cooled again to 0° to 5°C, and sodium hydrogen carbonate (12.6 parts) is added. A liquor prepared by diazotizing 2-aminonaphthalene-1,5-disulfonic acid (15 parts) in a usual manner is added to the above reaction solution at 0° to 5°C over 1 hour, and the mixture is stirred at the same temperature for 2 hours. The pH of the reaction solution is adjusted to 5 to 6 with hydrochloric acid, and sodium chloride (40 parts) is added to deposit crystals which are then collected ona suction-filter, washed and dried at 60°C to obtain a dye of the formula (33),

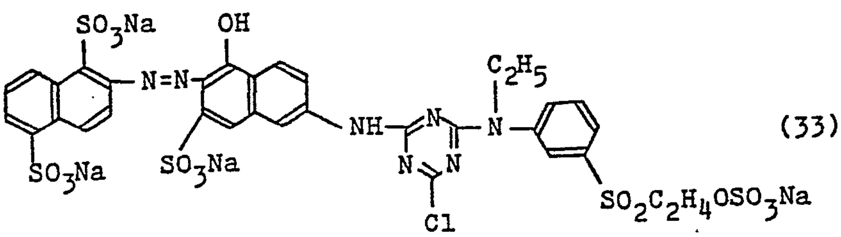

(33)

($\lambda_{max}$, 484 nm)

The dye (33) may also be synthesized by the following method: The same procedure as above is repeated, except that 1-N-ethylaminobenzene-3-β-hydroxyethylsulfone (11.4 parts) is used in place of the sulfuric ester of 1-N-ethylaminobenzene-3-β-hydroxyethylsulfone. The resulting compound is added to 100% sulfuric acid (500 parts) at 5° to 20°C over 2 hours, followed by stirring at the same temperature for 3 hours. The reaction solution is then gradually discharged into ice (1200 parts), and deposited crystals are collected by filtration. The crystals are then dispersed in water (400 parts) and dissolved by adjusting the pH to 5 to 6 with sodium carbonate. Sodium chloride (60 parts) is added to re-deposit crystals, which are then collected on a suction-filter, washed and dried at 60°C.

The dye (33) (0.3 part) is dissolved in water (200 parts), and after adding sodium sulfate (20 parts) and then cotton (10 parts), the temperature is raised to 50°C. 30 Minutes thereafter, sodium carbonate (4 parts) is added, and dyeing is carried out at the same temperature for 1 hour. After completion of the dyeing, the dyed cotton is washed with water and soaped to obtain an orange dyed product superior in chlorine fastness.

In the same manner as above, dyes producing dyed products of deep orange to scarlet color superior in chlorine fastness are obtained using the following compounds.

| Run No. | 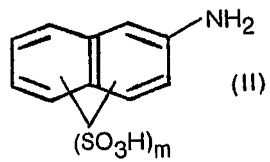 (II) | Compounds of the Formula (III) | | 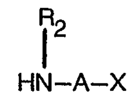 (V) |
|---|---|---|---|---|
| | | Z | $R_1$ | |
| (34) | 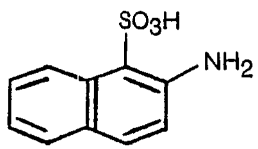 | $SO_3H$ | H | 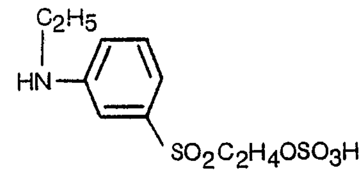 |
| (35) | 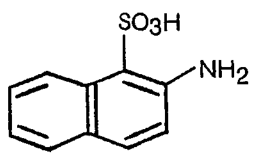 | H | $C_2H_5$ | 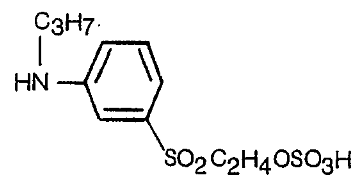 |
| (36) | 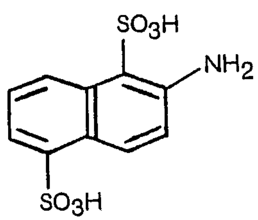 | H | H | 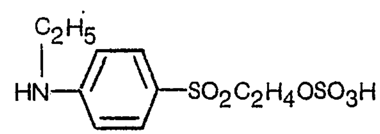 |
| (37) | 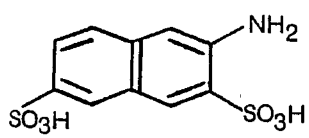 | H | H | 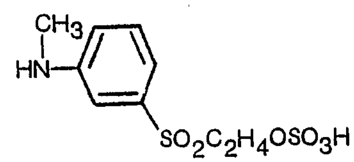 |

| Run No. | | Compounds of the Formula (III) | | 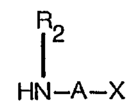 (V) |
|---|---|---|---|---|
| | | Z | $R_1$ | |
| (38) | 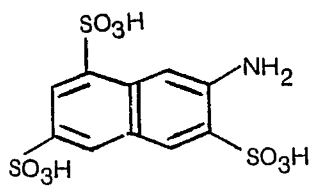 | H | H | 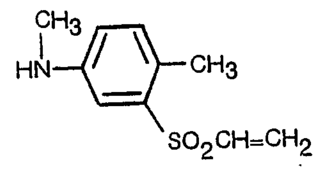 |

Example 6

Cyanuric chloride (9.2 parts) is dispersed at 0° to 5°C in a solution of a nonionic surfactant (0.1 part) in water (100 parts), and a solution containing 2-amino-5-hydroxynaphthalene-6-(1-sulfo-2-naphthylazo)-1,7-disulfonic acid, as synthesized from the diazonium salt of 2-aminonaphthalene-1-sulfonic acid (11 parts) and 2-amino-5-hydroxynaphthalene-1,7-disulfonic acid (16 parts), is added dropwise to the above dispersion over 1 hour while maintainining the pH at 4 to 5 with 20% aqueous sodium carbonate solution. The mixture is then stirred at 0° to 10°C for 2 hours. Thereafter, the sulfuric ester of 1-N-methylaminobenzene-3-β-hydroxyethylsulfone (15 parts) is added, and the temperature is raised to 50°C while adjusting the pH to 5 to 6 with 20% aqueous sodium carbonate solution, and the mixture is stirred at the same temperature for 6 hours. Sodium chloride (40 parts) is added to deposit crystals which are then collected on a suction-filter, washed and dried at 60°C to obtain a dye of the formula (39),

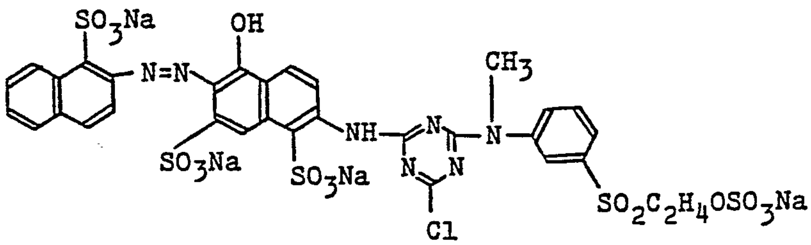

(39)

($\lambda_{max}$ , 494 nm)

The dye (39) (0.3 part) is dissolved in water (150 parts), and after adding sodium sulfate (30 parts) and then cotton (10 parts), the temperature of the bath is raised to 60°C. 20 Minutes thereafter, sodium carbonate (4 parts) is added, and dyeing is carried out at the same temperature for 1 hour. After completion of the dyeing, the dyed cotton is washed with water and soaped to obtain a dyed product of deep orange color superior in chlorine fastness.

In the same manner as above, dyes producing dyed products of deep orange to scarlet color superior in chlorine fastness are obtained using the following compounds.

| Run No. | 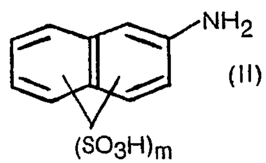 (II) | Compounds of the Formula (III) | | 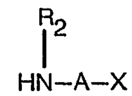 (V) |
|---|---|---|---|---|
| | | Z | $R_1$ | |
| (40) | 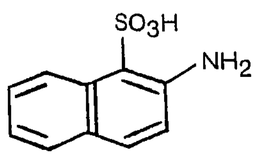 | $SO_3H$ | H | 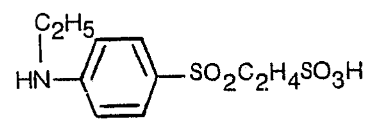 |
| (41) | 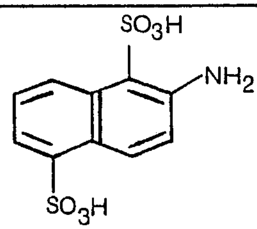 | H | H | 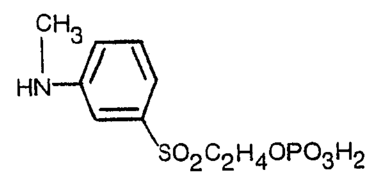 |
| (42) | 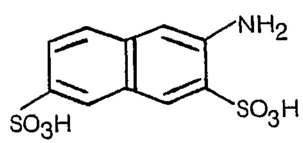 | H | H | 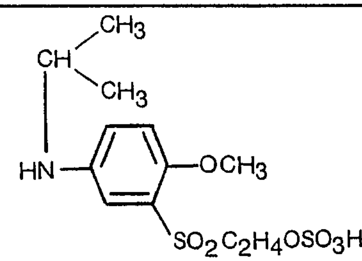 |
| (43) | 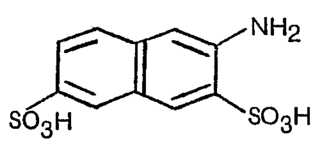 | H | H | 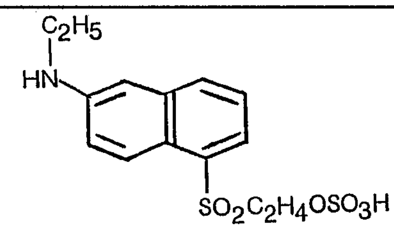 |

Example 7

Cyanuric chloride (9.2 parts) is dispersed at 0° to 5°C in a solution of a nonionic surfactant (0.1 part) in water (100 parts), and a solution of 2-amino-5-hydroxynaphthalene-1,7-disulfonic acid (16 parts) in water (200 parts) produced at a pH of 7 to 8 is added dropwise to the above dispersion at 0° to 5°C over 1 hour. After completion of the addition, the mixture is adjusted to a pH of 3 with 20% aqueous sodium carbonate solution, followed by stirring for 2 hours. Sodium hydrogen carbonate (14 parts) is then added. Thereafter, a liquor prepared by diazotizing 2-aminonaphthalene-1-sulfonic acid (11 parts) in a usual manner is added to the mixture at 0° to 5°C over 1 hour, and the mixture is followed by stirring at the same temperature for 2 hours. After adjusting the pH of the mixture to 5 to 6 with hydrochloric acid, the sulfuric ester of 1-N-hydroxyethylaminobenzene-3-β-hydroxyethylsulfone (16 parts) is added. The temperature is then raised to 40°C while adjusting the pH to 5 to 6 with 20% aqueous sodium carbonate solution, and the mixture is followed by stirring at the same temperature for 6 hours. Sodium chloride (40 parts) is added to deposit crystals, which were then collected on a suction-filter, washed and dried at 60°C to obtain a dye of the formula (44),

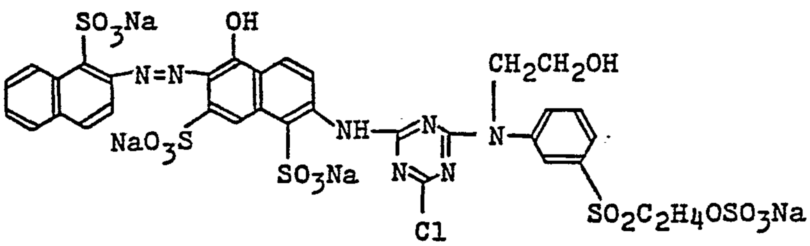

(44)

($\lambda_{max}$, 494 nm)

The dye (44) (0.3 part) is dissolved in water (300 parts), and after adding sodium sulfate (30 parts) and then cotton (10 parts), the temperature of the bath is raised to 60°C. 20 Minutes thereafter, sodium carbonate (5 parts) is added, and dyeing is carried out at the same temperature for 1 hour. After completion of the dyeing, the dyed cotton is washed with water and soaped to obtain a dyed product of deep orange color superior in chlorine fastness.

In the same manner as above, dyes producing dyed products of deep orange to scarlet color superior in chlorine fastness are obtained using the following compounds.

| Run No. | 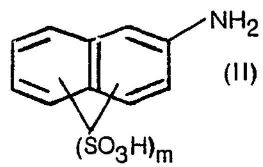 (II) | Compounds of the Formula (III) | | 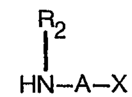 (V) |
|---|---|---|---|---|
| | | Z | $R_1$ | |
| (45) | 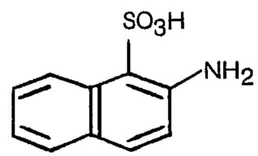 | $SO_3H$ | H | 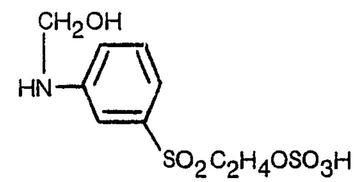 |
| (46) | 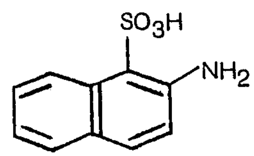 | H | $CH_3$ | 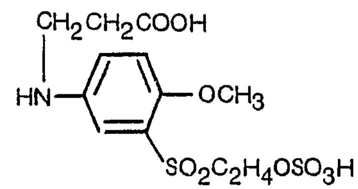 |
| (47) | 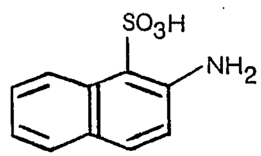 | H | H | 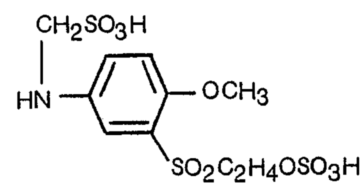 |
| (48) | 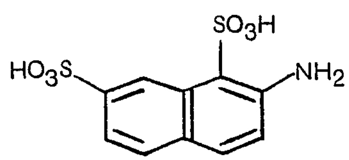 | H | H | 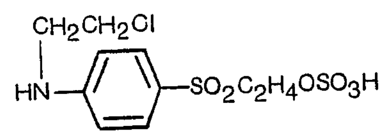 |

| Run No. | | Compounds of the Formula (III) | | $R_2$<br>HN—A—X (V) |
|---|---|---|---|---|
| | | Z | $R_1$ | |
| (49) | 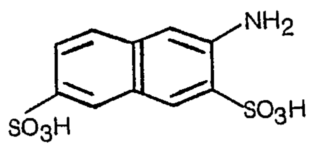 | H | H | 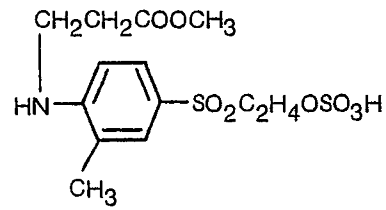 |
| (50) | 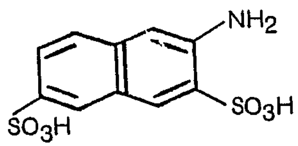 | H | H | 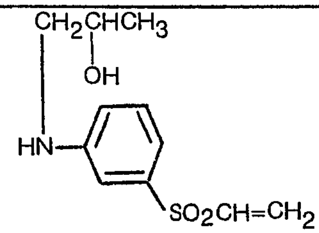 |

Example 8

Cyanuric chloride (9.2 parts) is dispersed at 0° to 5°C in a solution of a nonionic surfactant (0.1 part) in water (100 parts), and a solution obtained by dissolving the sulfuric ester of 1-N-hydroxyethylaminobenzene-3-β-hydroxyethylsulfone (14 parts) in water (100 parts) at a pH of 4 to 5, is added dropwise to the above dispersion at 0° to 5°C over 1 hour. After completion of the addition, the mixture is adjusted to a pH of 3 with 20% aqueous sodium carbonate solution, followed by stirring for 2 hours. Thereafter, J acid (11.3 parts) is added thereto, and the temperature is raised to 40°C while adjusting the pH to 5 to 6 with 20% aqueous sodium carbonate solution, and the mixture is followed by stirring at the same temperature for 2 hours. The reaction solution is then cooled again to 0° to 5°C, and sodium hydrogen carbonate (12.6 parts) is added thereto. A liquor prepared by diazotizing 2-aminonaphthalene-1,5-disulfonic acid (15 parts) in a usual manner is added at 0° to 5°C over 1 hour. After stirring at the same temperature for 2 hours, the pH is adjusted to 5 to 6 with hydrochloric acid. Sodium chloride (60 parts) is then added to deposit crystals, which are then collected on a suction-filter, washed and dried at 60°C to obtain a dye of the formula (51),

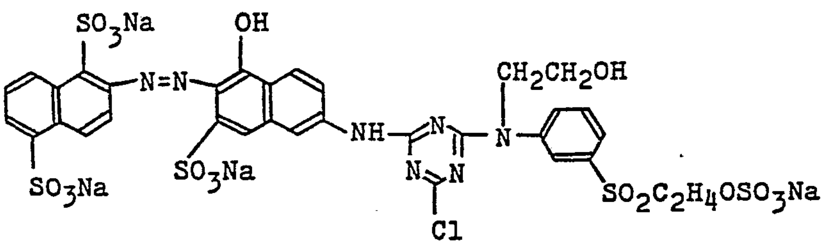

(51)

($\lambda_{max}$, 484 nm)

The dye (51) (0.3 part) is dissolved in water (200 parts), and after adding sodium sulfate (30 parts) and then cotton (10 parts), the temperature is raised to 50°C. 30 Minutes thereafter, sodium tertiary phosphate (4 parts) is added, and dyeing is carried out at the same temperature for 1 hour. After completion of the dyeing, the dyed cotton is washed with water and soaped to obtain a dyed product of deep orange color superior in chlorine fastness.

In the same manner as above, dyes producing dyed products of deep orange to scarlet color superior in chlorine fastness are obtained using the following compounds.

| Run No. | 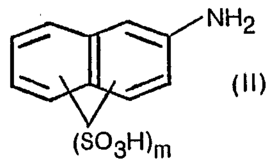 (II) | Compounds of the Formula (III) | | 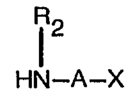 (V) |
|---|---|---|---|---|
| | | Z | $R_1$ | |
| (52) | 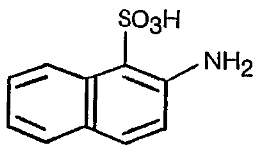 | $SO_3H$ | H | 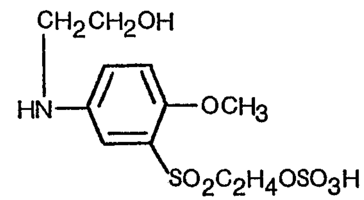 |
| (53) | 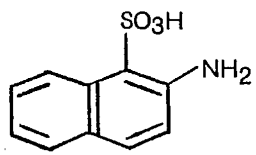 | H | $C_2H_5$ | 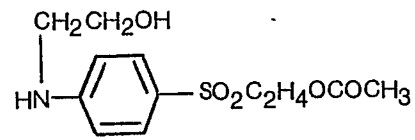 |
| (54) | 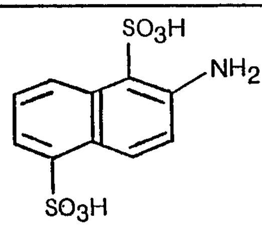 | H | H | 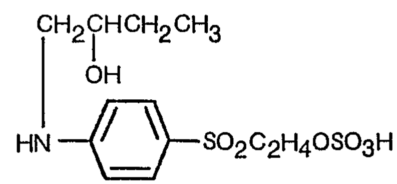 |
| (55) | 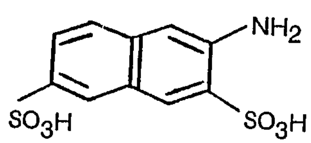 | H | H | 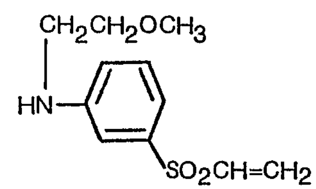 |

Example 9

Composition of print paste:

| | Parts |
|---|---|
| Dye (1) | 5 |
| Urea | 5 |
| Sodium alginate stock thickening (5%) | 50 |
| Hot water | 38 |
| Sodium hydrogen carbonate | 2 |

The print paste of the above composition is printed on mercerized cotton broad, and after intermediate drying, the cotton broad is steamed at 100°C for 5 minutes, hot rinsed, soaped, hot rinsed and dried. Thus, a scarlet printed product superior in chlorine fastness is obtained.

Example 10

Composition print paste:

| | Parts |
|---|---|
| Dye (16) | 4 |
| Urea | 5 |
| Sodium alginate stock thickening (5%) | 50 |
| Hot water | 39 |
| Sodium hydrogen carbonate | 2 |

The print paste of the above composition is printed on mercerized cotton broad, and after intermediate drying, the cotton broad is steamed at 120°C for 5 minutes, hot rinsed, soaped, hot rinsed and dried. Thus, a scarlet printed product superior in chlorine fastness is obtained.

Example 11

Composition of print paste:

| | Parts |
|---|---|
| Dye (33) | 5 |
| Urea | 5 |
| Sodium alginate stock thickening (5%) | 55 |
| Hot water | 33 |
| Sodium hydrogen carbonate | 2 |

The print paste of the above composition is printed on mercerized cotton broad, and after intermediate drying, the cotton broad is steamed at 100°3C for 5 minutes, hot rinsed, soaped, hot rinsed and dried. Thus, an orange printed product superior in chlorine fastness is obtained.

Example 12

Composition of print paste:

| | Parts |
|---|---|
| Dye (51) | 4 |
| Urea | 5 |
| Sodium alginate stock thickening (5%) | 60 |
| Hot water | 29 |
| Sodium hydrogen carbonate | 2 |

The print paste of the above composition is printed on mercerized cotton broad, and after intermediate drying, the cotton baord is steam at 120°C for 5 minutes, hot rinsed, soaped, hot rinsed and dried. Thus, an orange printed product superior in chlorine fastness is obtained.

## Claims

1. A compound represented by a free acid of the formula,

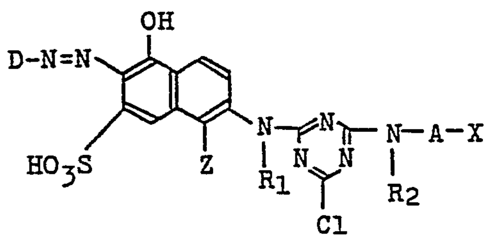

wherein D is a phenyl group substituted with 1 to 3 substituents selected from methyl, ethyl, methoxy, ethoxy, halogen, acetylamino, propionylamino, benzoylamino, succinylamino, maleinylamino, nitro, sulfonic acid and carboxyl groups, or a naphthyl group substituted with 1 to 3 sulfonic acid groups; $R_1$ is a hydrogen atom, or a methyl or ethyl group; $R_2$ is an alkyl group having 1 to 4 carbon atoms which is unsubstituted or substituted with a hydroxy, cyano, alkoxy, halogen, carboxy, alkoxycarbonyl or sulfonic acid group Z is a hydrogen atom or a sulfonic acid group; A is a phenylene residue which is unsubstituted or substituted with 1 or 2 substituents selected from methyl, ethyl, methoxy, ethoxy, chlorine, bromine and sulfonic acid groups, or a naphthalene residue unsubstituted or substituted with one sulfonic acid group; and X is $-SO_2CH=CH_2$ or $-SO_2CH_2CH_2Y$ in which Y is a group which is splittable by alkalis.

2. A compound represented by a free acid of the formula,

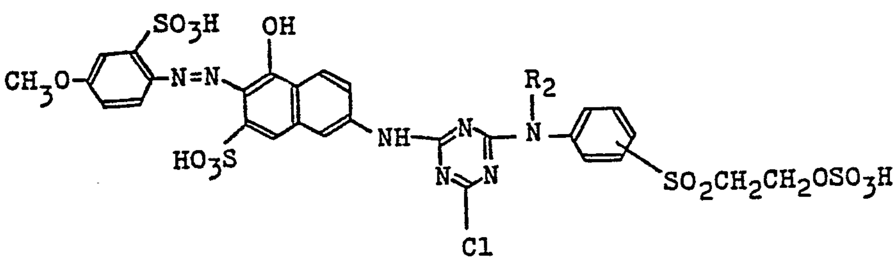

wherein $R_2$ is an alkyl group having 1 to 4 carbon atoms which is unsubstituted or substituted with a hydroxy, cyano, alkoxy, halogen, carboxy, alkoxycarbonyl or sulfonic acid group.

3. A compound represented by a free acid of the formula,

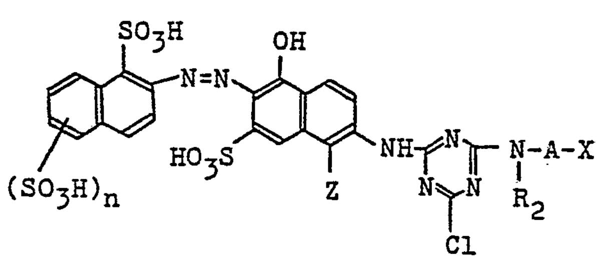

wherein $R_2$ is an alkyl group having 1 to 4 carbon atoms which is unsubstituted or substituted with a hydroxy, cyano, alkoxy, halogen, carboxy, alkoxycarbonyl or sulfonic acid group, Z is a hydrogen atom or a sulfonic acid group, n is 0 or 1, and A is a phenylene residue which is unsubstituted or substituted with 1 or 2 substituents selected from methyl, ethyl, methoxy, ethoxy, chlorine, bromine and sulfonic acid groups, or a naphthylene residue which is unsubstituted or substituted with one sulfonic acid group, and X is $-SO_2CH=CH_2$ or $-SO_2CH_2CH_2Y$ in which Y is a group which is splittable by alkalis.

4. A compound represented by a free acid of the formula,

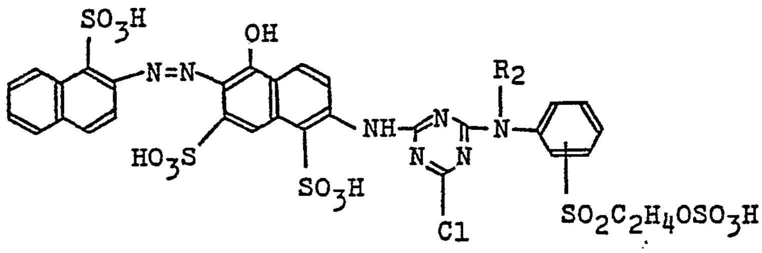

wherein $R_2$ is an alkyl group having 1 to 4 carbon atoms which is unsubstituted or substituted with a hydroxy, cyano, alkoxy, halogen, carboxy, alkoxycarbonyl or sulfonic acid group.

5. A compound represented by a free acid of the formula,

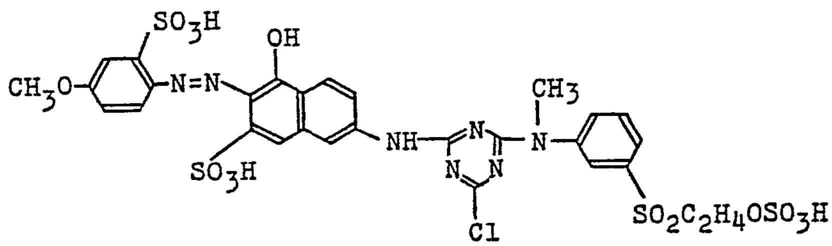

6. A compound represented by a free acid of the formula,

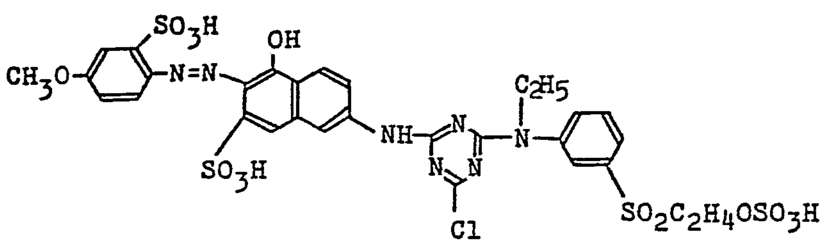

7. A compound represented by a free acid of the formula,

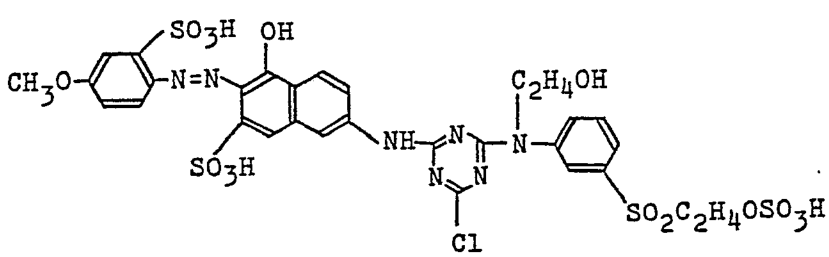

8. A compound represented by a free acid of the formula,

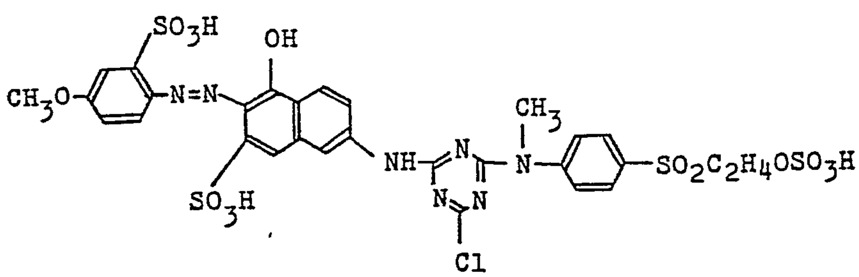

9. A compound represented by a free acid of the formula,

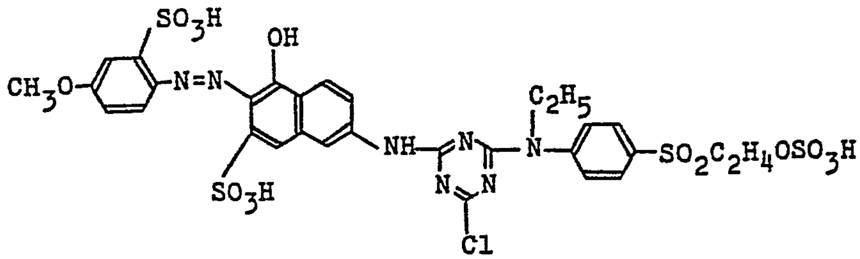

10. A compound represented by a free acid of the formula,

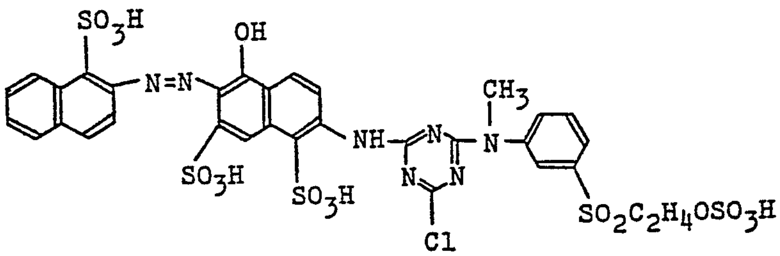

11. A compound represented by a free acid of the formula,

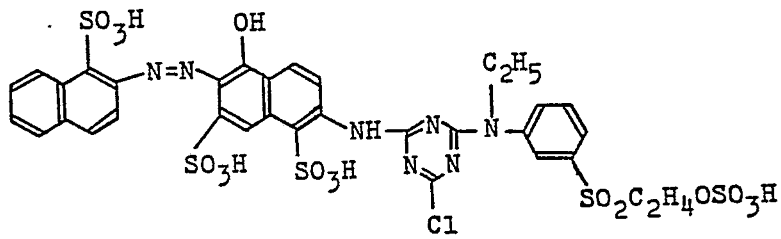

12. A compound represented by a free acid of the formula,

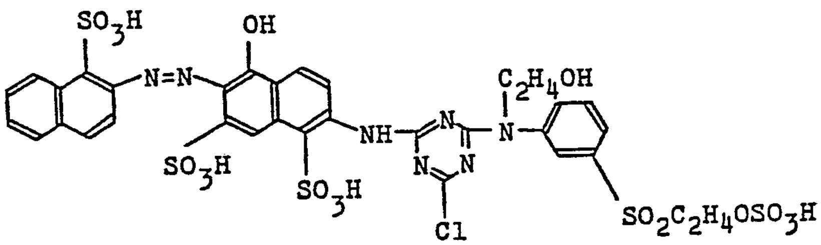

13. A method for producing compounds represented by a free acid of the formula (I),

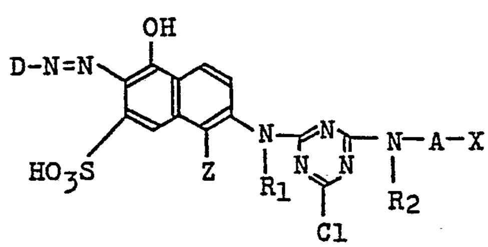

(I)

wherein D is a phenyl group substituted with 1 to 3 substituents selected from methyl, ethyl, methoxy, ethoxy, halogen, acetylamino, propionylamino, benzoylamino, succinylamino, maleinylamino, nitro, sulfonic acid and carboxyl groups, or a naphthyl group substituted with 1 to 3 sulfonic acid groups; $R_1$ is a hydrogen atom, or a methyl or ethyl group; $R_2$ is an alkyl group having 1 to 4 carbon atoms which is unsubstituted or substituted with a hydroxy, cyano, alkoxy, halogen, carboxy, alkoxycarbonyl or sulfonic acid group Z is a hydrogen atom or a sulfonic acid group; A is a phenylene residue which is unsubstituted or

substituted with 1 or 2 substituents selected from methyl, ethyl, methoxy, ethoxy, chlorine, bromine and sulfonic acid groups, or a naphthalene residue unsubstituted or substituted with one sulfonic acid group; and X is $-SO_2CH{=}CH_2$ or $-SO_2CH_2CH_2Y$ in which Y is a group which is splittable by alkalis, which comprises

(1) subjecting cyanuric chloride to first-step condensation with a monoazo compound of the formula (IV),

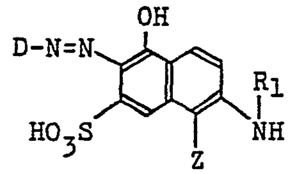

(IV)

wherein D, $R_1$ and Z are as defined above, and then to second-step condensation with a compound of the formula (V),

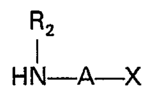

(V)

wherein $R_2$, A and X are as defined above, or

(2) subjecting cyanuric chloride to first-step condensation with the compound of the formula (V) and then to second-step condensation with the monoazo compound of the formula (IV), or

(3) condensing cyanuric chloride with a compound of the formula (III),

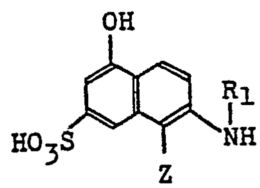

(III)

wherein $R_1$ and Z are as defined above, and the compound of the formula (V) in optional order to obtain a monochlorotriazinyl of the formula (VI),

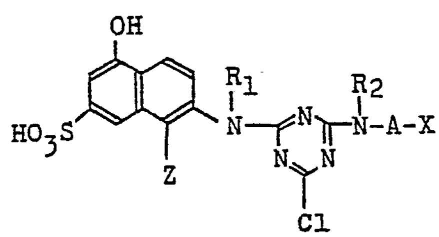

(VI)

wherein $R_1$, $R_2$, Z, A and X are as defined above, and then coupling the compound (VI) with a diazonium salt or an aromatic amine of the formula (II),

$$D-NH_2 \qquad (II)$$

wherein D is as defined above, or

(4) subjecting cyanuric chloride to first-step condensation with the compound of the formula (III), coupling the resulting compound with the diazonium salt of the aromatic amine of the formula (II) to obtain a monoazo compound of the formula (VII),

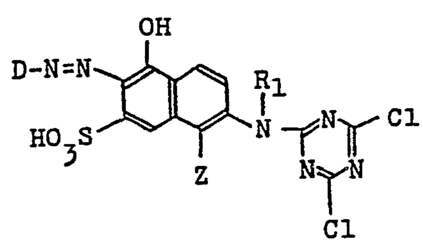

(VII)

wherein D, $R_1$ and Z are as defined above,
and condensing the compound (VII) with a compound of the formula (V), or

(5) condensing cyanuric chloride with the monoazo compound of the formula (IV) and a compound of the formula (VIII),

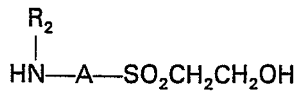

(VIII)

wherein $R_2$ and A are as defined above,
in optional order to obtain a monochlorotriazinyl compound of the formula (IX),

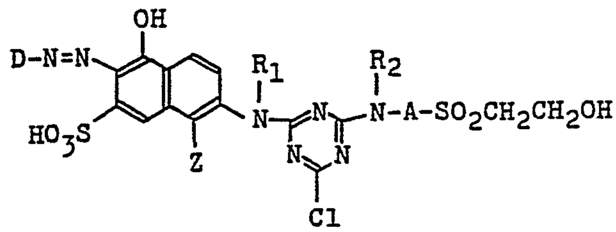

(IX)

wherein D, $R_1$, $R_2$, A and Z are as defined above, which is then esterified with an acid, or

(6) condensing cyanuric chloride with compounds of the formulae (III) and (VIII) in optional order, and coupling the resulting compound with the diazonium salt of the aromatic amine of the formula (II) to obtain the monoazo compound of the formula (IX) which is then esterified with an acid.

14. A method for dyeing cellulosic fibers which comprise treating the fibres with a dyestuff as described in any of claims 1 to 12 and subjecting the treated fibres to a fixing step.

**Patentansprüche**

1. Verbindung in Form einer freien Säure der Formel:

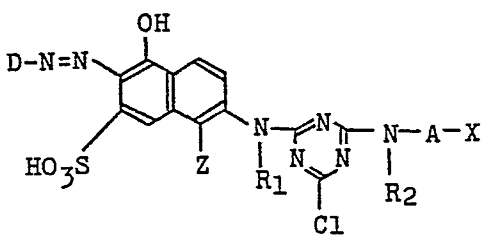

worin bedeuten:

D eine durch 1 bis 3 Methyl-, Ethyl-, Methoxy-, Ethoxy-, Halogen-, Acetylamino-, Propionylamino-, Benzoylamino-, Succinylamino-, Maleinylamino-, Nitro-, Sufonsäure- und/oder Carboxylsubstituenten substituierte Phenylgruppe oder eine durch 1 bis 3 Sulfonsäuresubstituenten substituierte Naphthylgruppe;

$R_1$ ein Halogenatom oder eine Methyl- oder Ethyl- gruppe;

$R_2$ eine gegebenenfalls, hydroxy-, cyano-, alkoxy-, halogen-, carboxy-, alkoxycarbonyl- oder sulfonsäure-substituierte Alkylgruppe mit 1 bis 4 Kohlenstoffatom(en);

Z ein Wasserstoffatom oder eine Sulfonsäuregruppe;

A ein gegebenenfalls ein- oder zweifach methyl-, ethyl-, methoxy-, ethoxy-, chlor-, brom- und/oder sulfonsäuresubstituierte Phenylengruppe oder eine gegebenenfalls einfach sulfonsäuresubstituierte Naphthylengruppe und

X eine Gruppe der Formeln $—SO_2CH=CH_2$ oder $—SO_2CH_2CH_2Y$, mit Y gleich einer durch Alkalien abspaltbaren Gruppe.

2. Verbindung in Form einer freien Säure der Formel:

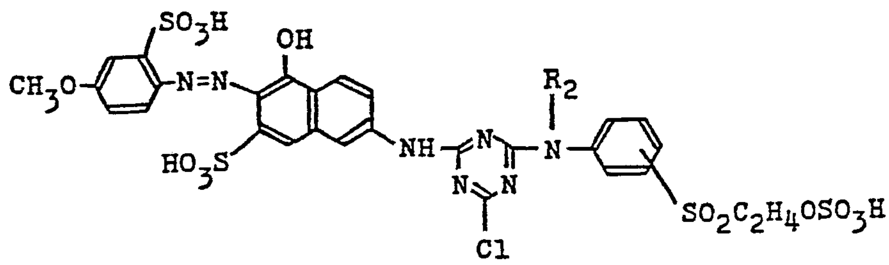

worin $R_2$ für eine gegebenenfalls hydroxy-, cyano-, alkoxy-, halogen-, carboxy-, alkoxycarbonyl- und/oder sulfonsäuresubstituierte Alkylgruppe mit 1 bis 4 Kohlenstoffatom(en) steht.

3. Verbindung in Form einer freien Säure der Formel:

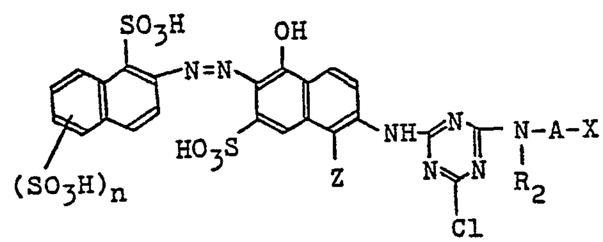

worin bedeuten:

$R_2$ eine gegebenenfalls hydroxy-, cyano-, alkoxy-, halogen-, carboxy-, alkoxycarbonyl-, und/oder sulfonsäuresubstituierte Alkylgruppe mit 1 bis 4 Kohlenstoffatom(en);

Z ein Wasserstoffatom oder eine Sulfonsäuregruppe; n=0 oder 1,

A eine gegebenenfalls ein- oder zweifach methyl-, ethyl-, methoxy-, ethoxy-, chlor-, brom- und/oder sulfonsäuresubstituierte Phenylengruppe oder eine einfach sulfonsäuresubstituierte Naphthalengruppe und

X eine Gruppe der Formeln $—SO_2CH=CH_2$ oder $—SO_2CH_2CH_2Y$, mit Y gleich einer durch Alkalien abspaltbaren Gruppe.

4. Verbindung in Form einer freien Säure der Formel:

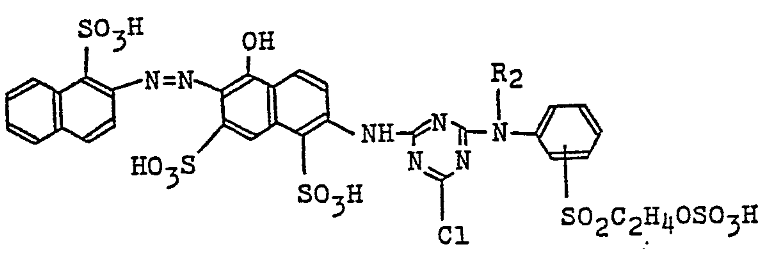

worin $R_2$ für eine gegebenenfalls hydroxy-, cyano-, alkoxy-, halogen-, carboxy-, alkoxycarbonyl- oder sulfonsäuresubstituierte Alkylgruppe mit 1 bis 4 Kohlenstoffatom(en) steht.

5. Verbindung in Form einer freien Säure der Formel:

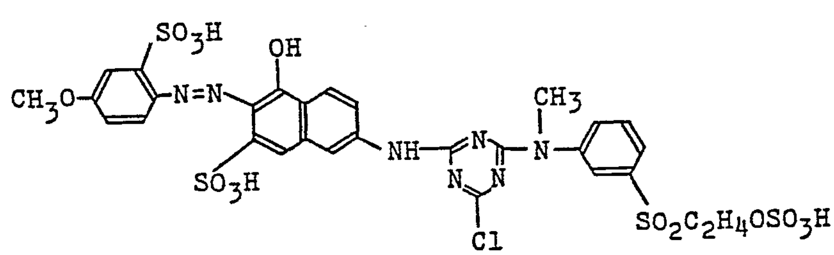

6. Verbindung in Form einer freien Säure der Formel:

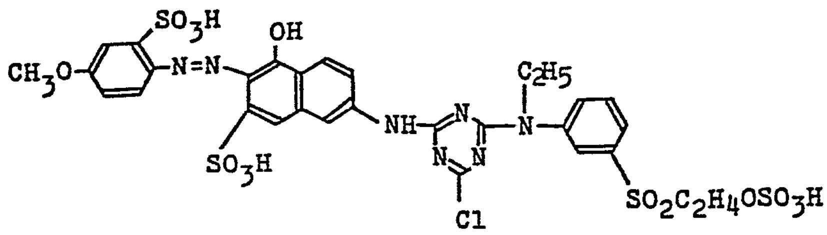

7. Verbindung in Form einer freien Säure der Formel:

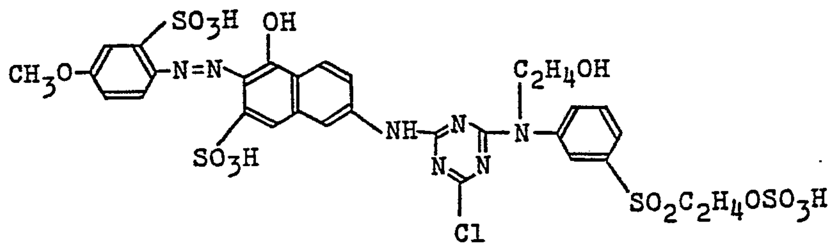

8. Verbindung in Form einer freien Säure der Formel:

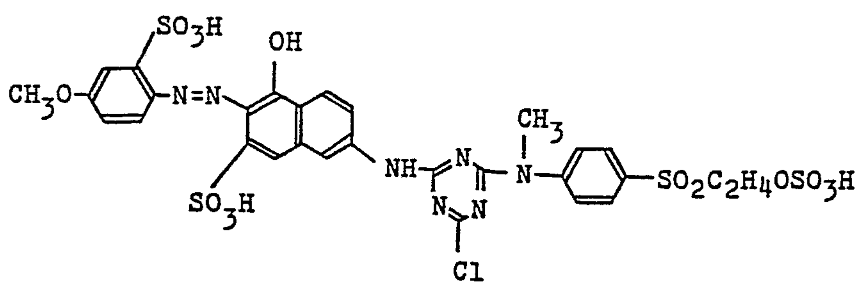

9. Verbindung in Form einer freien Säure der Formel:

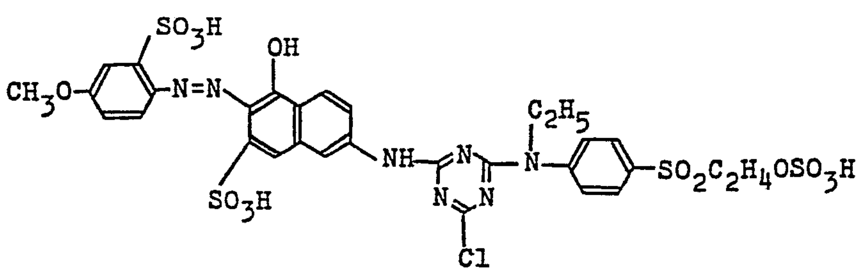

10. Verbindung in Form einer freien Säure der Formel:

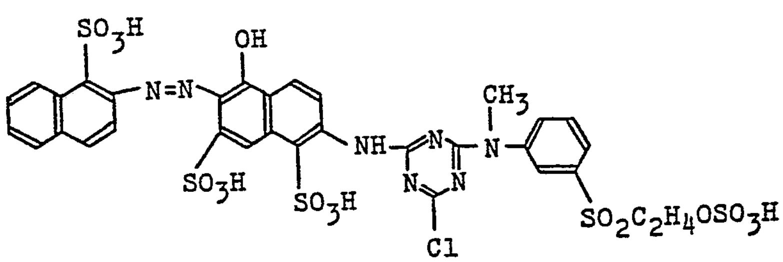

11. Verbindung in Form einer freien Säure der Formel:

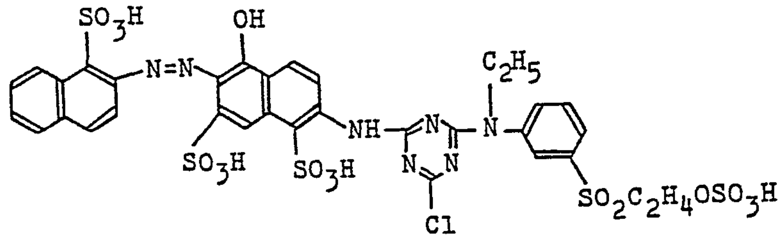

12. Verbindung in Form einer freien Säure der Formel:

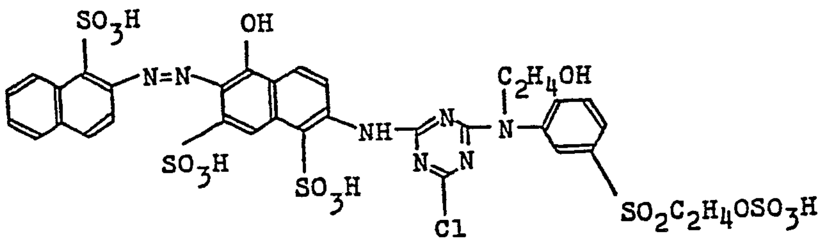

13. Verfahren zur Herstellung von Verbindungen in Form frier Säuren der Formel:

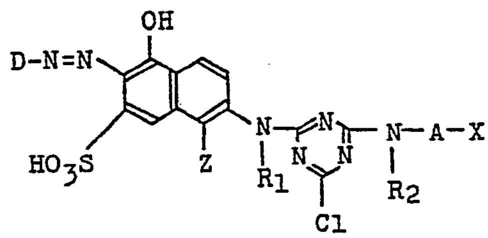

(I)

worin bedeuten:

D eine durch 1 bis 3 Methyl-, Ethyl-, Methoxy-, Ethoxy-, Halogen-, Acetylamino-, Propionylamino-, Benzoylamino-, Succinylamino-, Maleinylamino-, Nitro-, Sufonsäure- und/oder Carboxylsubstituenten substituierte Phenylgruppe oder eine durch 1 bis 3 Sulfonsäuresubstituenten substituierte Naphthylgruppe;

$R_1$ ein Halogenatom oder eine Methyl- oder Ethyl- gruppe;

$R_2$ eine gegebenenfalls, hydroxy-, cyano-, alkoxy-, halogen-, carboxy-, alkoxycarbonyl- oder sulfonsäure-substituierte Alkylgruppe mit 1 bis 4 Kohlenstoffatom(en);

Z ein Wasserstoffatom oder eine Sulfonsäuregruppe;

A ein gegebenenfalls ein- oder zweifach methyl-, ethyl-, methoxy-, ethoxy-, chlor-, brom- und/oder sulfonsäuresubstituierte Phenylengruppe oder eine gegebenenfalls einfach sulfonsäuresubstituierte Naphthylengruppe und

X eine Gruppe der Formeln $—SO_2CH{=}CH_2$ oder $—SO_2CH_2CH_2Y$, mit Y gleich einer durch Alkalien abspaltbaren Gruppe,

dadurch gekennzeichnet, daß man

1. Cyanursäurechlorid in einer ersten Kondensationsstufe mit einer Monoazoverbindung der Formel:

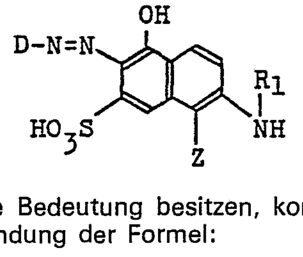

(IV)

worin D, $R_1$ und Z die angegebene Bedeutung besitzen, kondensiert und danach in einer zweiten Kondensationsstufe mit einer Verbindung der Formel:

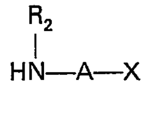

(V)

worin $R_2$, A und X die angegebene Bedeutung besitzen, kondensiert, oder

2. Cyanursäurechlorid in einer ersten Kondensationsstufe mit der Verbindung der Formel (V) und danach in einer zweiten Kondensationsstufe mit der Monoazoverbindung der Formel (IV) kondensiert, oder

3. Cyanursäurechlorid in beliebiger Reihenfolge mit einer Verbindung der Formel:

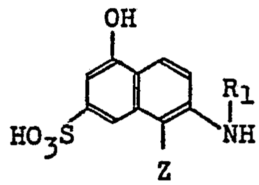

(III)

worin $R_1$ und Z die angagebene Bedeutung besitzen, und mit der Verbindung der Formel (V) zu einer Monochlortriazinylverbindung der Formel:

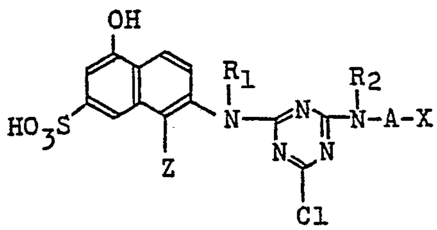

(VI)

worin $R_1$, $R_2$, Z, A und Y die angegebene Bedeutung besitzen, kondensiert und danach die Verbindung der Formel (VI) mit einem Diazoniumsalz eines aromatischen Amins der Formel;

$$D—NH_2 \qquad (II)$$

worin D die angegebene Bedeutung besitzt, kuppelt, oder

4. Cyanursäurechlorid in einer ersten Kondensationsstufe mit der Verbindung der Formel (III) konsensiert, das erhaltene Kondensationsprodukt mit dem Diazoniumsalz eines aromatischen Amins der Formel (II) zu einer Monoazoverbindung der Formel:

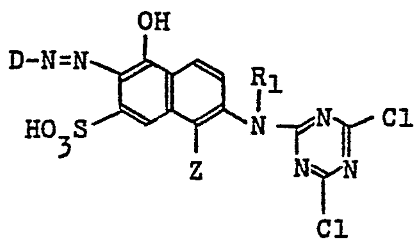

(VII)

worin D, $R_1$ und Z die angegebene Bedeutung besitzen, kuppelt und die Verbindung der Formel (VII) mit einer Verbindung der Formel (V) kondensiert, oder

5. Cyanursäurechlorid in beliebiger Reihenfolge mit der Monoazoverbindung der Formel (IV) und einer Verbindung der Formel:

$$\overset{R_2}{\overset{|}{HN}}—A—SO_2CH_2CH_2OH \qquad (VIII)$$

worin $R_2$ und A die angegebene Bedeutung besitzen, zu einer Monochlortriazinylverbindung der Formel:

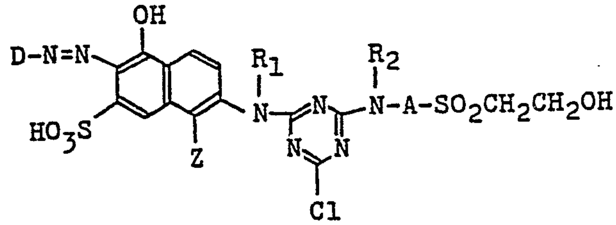

(IX)

worin D, $R_1$, $R_2$, A und Z die angegebene Bedeutung besitzen, kondensiert und letztere dann mit einer Säure verestert, oder

6. Cyanursäurechlorid in beliebiger Reihenfolge mit Verbindungen der Formel (III) und (VIII) kondensiert, das erhaltene Kondensationsprodukt mit dem Diazoniumsalz des aromatischen Amins der Formel (II) zu der Monoazoverbindung der Formel (IX) kuppelt und letztere mit einer Säure verestert.

14. Verfahren zum Anfärben von Cellulosefasern, dadurch gekennzeichnet, daß man die Fasern mit einem Farbstoff gemäß einem der Ansprüche 1 bis 12 behandelt und danach die behandelten Fasern einer Fixierung unterwirft.

## Revendications

1. Composé représenté par un acide libre de formule

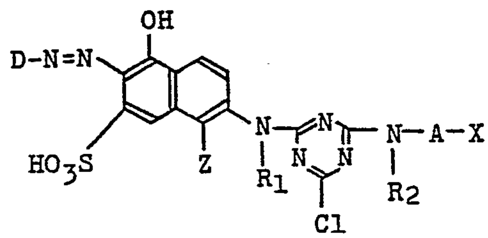

(I)

dans laquelle D est un groupe phényle substitué par 1 à 3 substituants choisis parmi les groupes méthyle, éthyle, méthoxy, éthoxy, halogène, acétylamino, propionylamino, benzoylamino, succinylamino, maléinylamino, nitro, acide sulfonique et carboxyle, ou un groupe naphtyle substitué par 1 à 3 groupes acide sulfonique; $R_1$ est un atome d'hydrogène ou un groupe méthyle ou éthyle; $R_2$ est un groupe alcoyle à 1—4 atomes de carbone, qui est non substitué ou substitué par un groupe hydroxy, cyano, alcoxy, halogène, carboxy, alcoxycarbonyle ou acide sulfonique; Z est un atome d'halogène ou un groupe acide sulfonique; A est un radical phénylène qui est non substitué ou substitué par 1 ou 2 substituants choisis parmi les groupes méthyle, éthyle, méthoxy, éthoxy, chlore, brome et acide sulfonique, ou un radical naphtalène qui est non substitué ou substitué par un groupe acide sulfonique; et X est mis pour $—SO_2CH{=}CH_2$ ou $—SO_2CH_2CH_2Y$, Y étant un groupe qui peut être élimé par des alcalis.

2. Composé représenté par un acide libre de formule

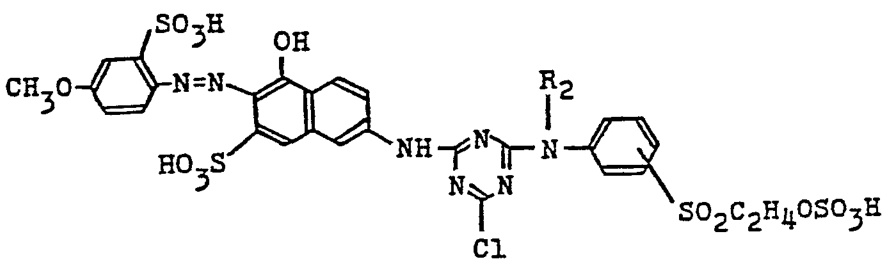

dans laquelle $R_2$ est un groupe alcoyle à 1—4 atomes de carbone qui est non substitué ou substitué par un groupe hydroxy, cyano, alcoxy, halogène, carboxy, alcoxycarbonyle ou acide sulfonique.

3. Composé représenté par un acide libre de formule

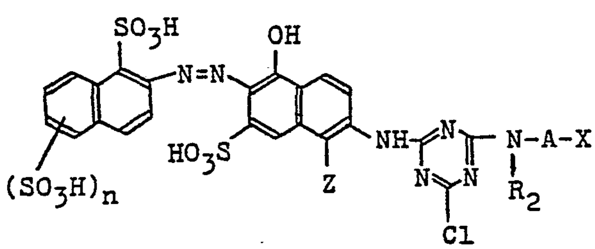

dans laquelle $R_2$ est un groupe alcoyle à 1—4 atomes de carbone qui est non substitué ou substitué par un groupe hydroxy, cyano, alcoxy, halogène, carboxy, alcoxycarbonyle ou acide sulfonique, Z est un atome d'hydrogène ou un groupe acide sulfonique, n est mis pour 0 ou 1, et A est un radical phénylène qui est non substitué ou substitué par 1 ou 2 substituants choisis parmi les groupes méthyle, éthyle, méthoxy, éthoxy, chlore, brome et acide sulfonique, ou un radical naphtylène qui est non substitué ou substitué par un groupe acide sulfonique, X étant mis pour $—SO_2CH{=}CH_2$ ou $—SO_2CH_2CH_2Y$, Y étant un groupe qui peut être éliminé par des alcalis.

4. Composé représenté par un acide libre de formule

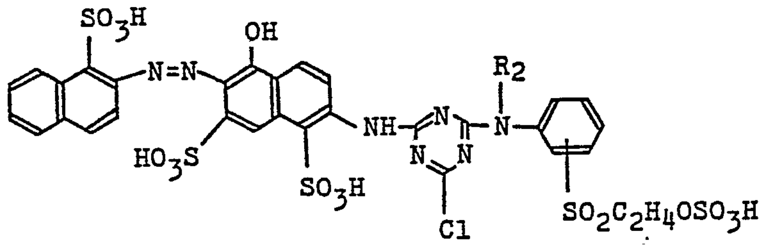

dans laquelle $R_2$ est un groupe alcoyle à 1—4 atomes de carbone qui est non substitué ou substitué par un groupe hydroxy, cyano, alcoxy, halogène, carboxy, alcoxycarbonyle ou acide sulfonique.

5. Composé représenté par un acide libre de formule

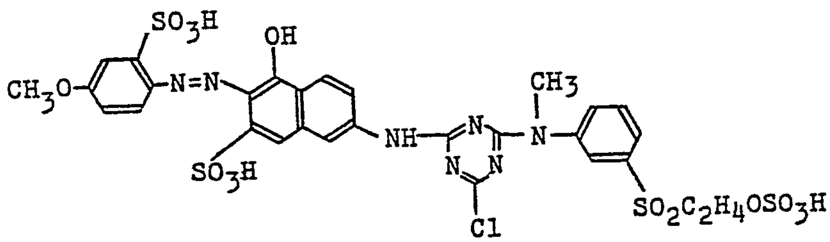

6. Composé représenté par un acide libre de formule

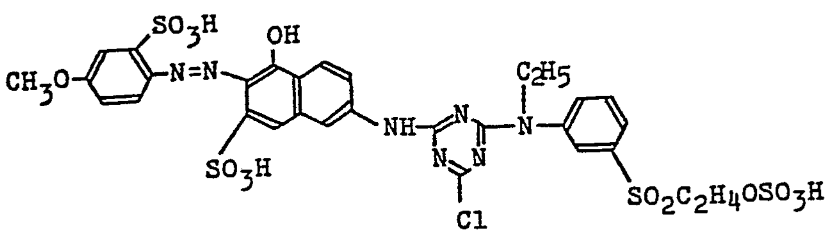

7. Composé représenté par un acide libre de formule

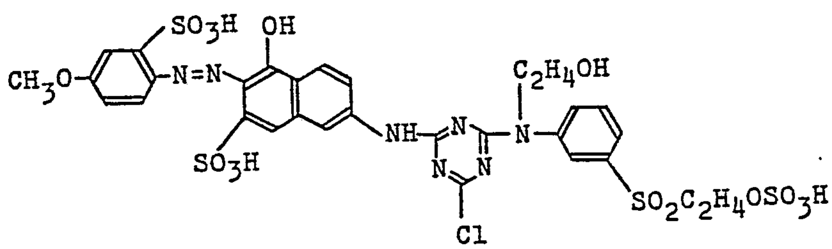

8. Composé représenté par un acide libre de formule

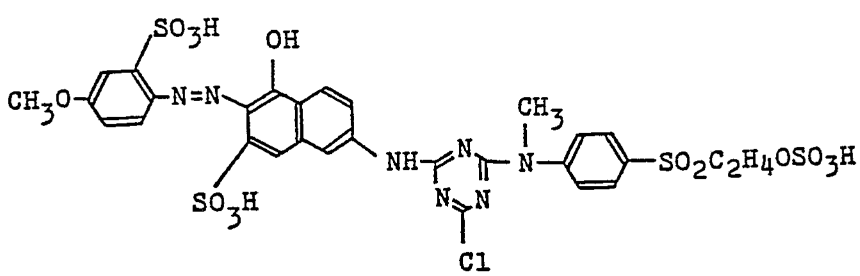

9. Composé représenté par un acide libre de formule

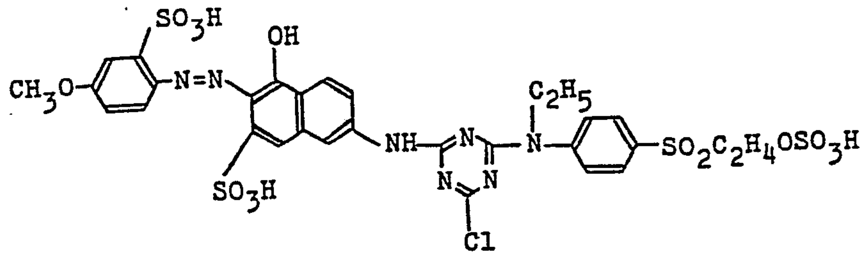

10. Composé représenté par un acide libre de formule

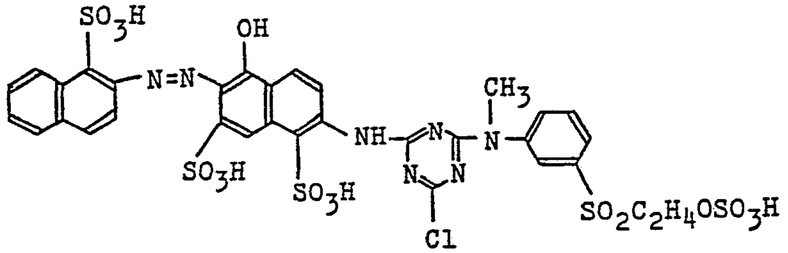

11. Composé représenté par un acide libre de formule

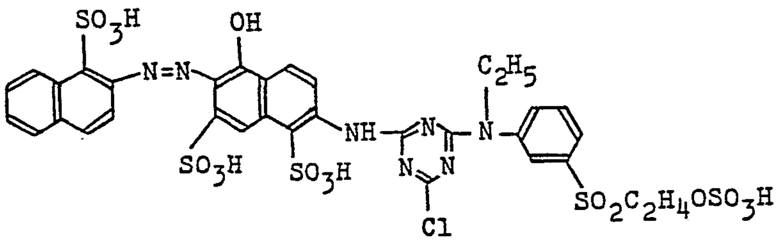

12. Composé représenté par un acide libre de formule

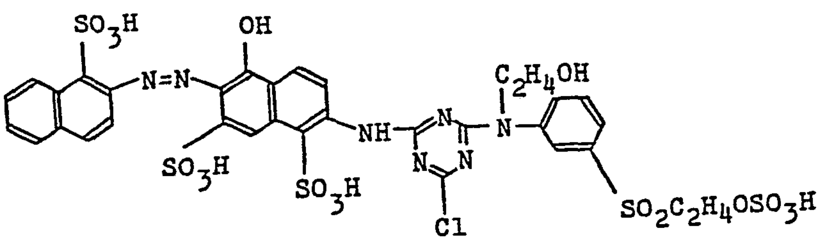

13. Procédé pour la préparation de composés représentés par un acide libre de formule

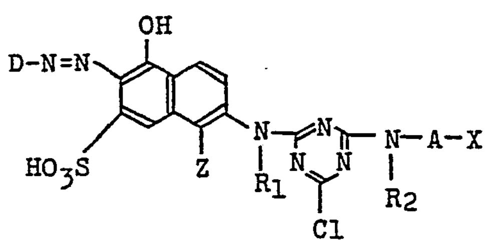

(I)

dans laquelle D est un groupe phényle substitué par 1 à 3 substituants choisis parmi les groupes méthyle, éthyle, méthoxy, éthoxy, halogène, acétylamino, propionylamino, benzoylamino, succinylamino, maléinylamino, nitro, acide sulfonique et carboxyle, ou un groupe naphtyle substitué par 1 à 3 groupes acide sulfonique; $R_1$ est un atome d'hydrogène ou un groupe méthyle ou éthyle; $R_2$ est un groupe alcoyle à 1—4 atomes de carbone, qui est non substitué ou substitué par un groupe hydroxy, cyano, alcoxy, halogène, carboxy, alcoxycarbonyle ou acide sulfonique; Z est un atome d'halogène ou un groupe acide sulfonique; A est un radical phénylène qui est non substitué ou substitué par 1 ou 2

substituants choisis parmi les groupes méthyle, éthyle, méthoxy, éthoxy, chlore, brome et acide sulfonique, ou un radical naphtalène qui est non substitué ou substitué par un groupe acide sulfonique; et X est mis pour $—SO_2CH=CH_2$ ou $—SO_2CH_2CH_2Y$, Y étant un groupe qui peut être élimé par des alcalis,

caractérisé en ce qu'il comprend les opérations consistant à:

(1) soumettre le chlorure cyanurique à une première condensation avec un composé monoazoïque de formule (IV)

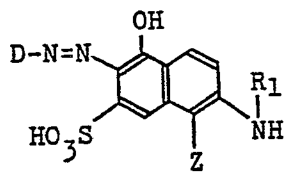

(IV)

dans laquelle D, $R_1$ et Z ont les significations données ci-dessus, puis à une seconde condensation avec un composé de formule (V)

$$\begin{array}{c} R_2 \\ | \\ HN—A—X \end{array} \qquad (V)$$

dans laquelle $R_2$, A et X ont les significations données ci-dessus, ou

(2) soumettre le chlorure cyanurique à une première condensation avec le composé de formule (V), puis à une seconde condensation avec le composé monoazoïque de formule (IV), ou

(3) condenser le chlorure cyanurique avec un composé de formule (III)

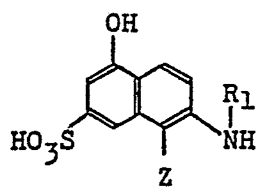

(III)

dans laquelle $R_1$ et Z ont les significations données ci-dessus, et avec le composé de formule (V) dans n'importe quel ordre, pour obtenir un composé monochlorotriazinylique de formule (VI)

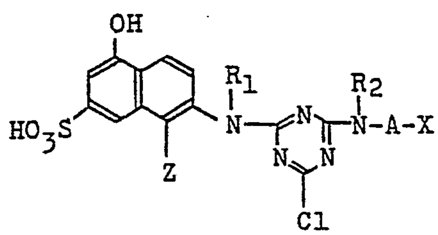

(VI)

dans laquelle $R_1$, $R_2$, Z, A et X ont les significations données ci-dessus, puis copuler le composé (VI) avec un sel de diazonium d'une amine aromatique de formule (II)

$$D—NH_2 \qquad (II)$$

dans laquelle D a la signification donnée ci-dessus, ou

(4) soumettre le chlorure cyanurique à une première condensation avec le composé de formule (III), copuler le composé résultant avec le sel de diazonium de l'amine aromatique de formule (II) pour obtenir un composé monoazoïque de formule (VII)

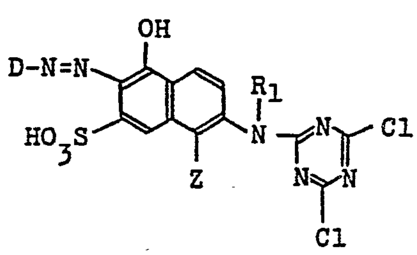

(VII)

dans laquelle D, $R_1$ et Z ont les significations données ci-dessus, et condenser le composé (VII) avec un composé de formule (V), ou

(5) condenser le chlorure cyanurique avec le composé monoazoïque de formule (IV) et un composé de formule (VIII)

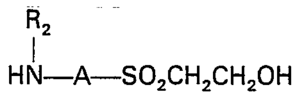

(VIII)

dans laquelle $R_2$ et A ont les significations données ci-dessus, dans n'importe quel ordre, pour obtenir un composé monochlorotriazinylique de formule (IX)

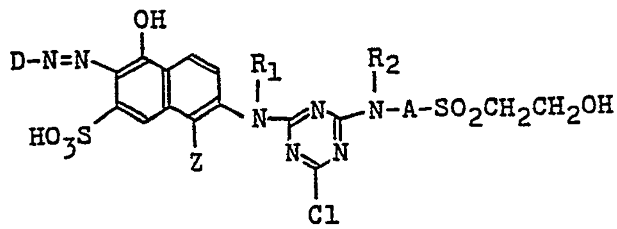

(IX)

dans laquelle D, $R_1$, $R_2$, A et Z ont les significations données ci-dessus, composé qui est ensuite estérifié avec un acide, ou

(6) condenser le chlorure cyanurique avec des composés de formules (III) et (VIII) dans n'importe quel ordre, et copuler le composé résultant avec le sel de diazonium de l'amine aromatique de formule (II), pour obtenir le composé monoazoïque de formule (IX) qui est ensuite estérifié avec un acide.

14. Procédé pour la teinture de fibres cellulosiques, caractérisé en ce qu'il comprend les opérations consistant à traiter les fibres par une matière colorante selon l'une quelconque des revendications 1 à 12 et à soumettre les fibres traitées à une opération de fixation.